(19) Europäisches Patentamt
European Patent Office
Office européen des brevets

(11) EP 2 393 296 A1

(12) **EUROPEAN PATENT APPLICATION**
published in accordance with Art. 153(4) EPC

(43) Date of publication:
**07.12.2011 Bulletin 2011/49**

(21) Application number: **10735629.7**

(22) Date of filing: **27.01.2010**

(51) Int Cl.:
***H04N 7/32*** *(2006.01)*

(86) International application number:
**PCT/JP2010/000445**

(87) International publication number:
**WO 2010/087157 (05.08.2010 Gazette 2010/31)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.01.2009 JP 2009018831**

(71) Applicant: **Panasonic Corporation**
**Kadoma-shi**
**Osaka 571-8501 (JP)**

(72) Inventors:
- **SASAI, Hisao**
**Osaka 540-6207 (JP)**
- **Nishi, Takahiro**
**Osaka 540-6207 (JP)**
- **SHIBAHARA, Youji**
**Osaka 540-6207 (JP)**
- **DRUGEON, Virginie**
**Osaka 540-6207 (JP)**

(74) Representative: **Eisenführ, Speiser & Partner**
**Postfach 10 60 78**
**28060 Bremen (DE)**

# (54) IMAGE CODING METHOD AND IMAGE DECODING METHOD

(57) In order to achieve higher coding efficiency, suppress coding artifacts, and not to need a large computing amount, an image and video data are coded. Provided is an image coding method of coding image data on a block-by-block basis, and the method includes: coding a current block according to a prediction based on a selected prediction mode (S101); determining an estimated prediction mode from among candidate prediction modes; and outputting the coded current block and mode information for reconstructing the selected prediction mode (S108). The determining includes: detecting an edge (S103); reducing the candidate prediction modes in number based on the detected edge (S105); determining the estimated prediction mode from among the candidate prediction modes reduced in number (S106); and generating the mode information based on the estimated prediction mode and the selected prediction mode (S107).

FIG. 8

Start
Code current block
S101
Generate decoded block
S102
Edge detection process
S103
Edge detected?
S104
No
Yes
Limit candidate prediction modes
S105
Determine estimated prediction mode
S106
Generate mode information
S107
Output mode information and coded current block
S108
End

EP 2 393 296 A1

## Description

[Technical Field]

The present invention relates to an image coding method of compress-coding an image and video data with high coding efficiency, an image decoding method of decoding the image and video data that are compress-coded, and an image coding apparatus and an image decoding apparatus corresponding to the methods.

[Background Art]

The number of applications for, for example, video-on-demand services including video conferences via the Internet, digital video broadcasts, and streaming of video content ever has been increasing, and the applications rely on transmission of video information. When the video data is transmitted or recorded, a large amount of data is transmitted through a conventional transmission channel, or recorded on a conventional recording medium having a limited data capacity. Thus, in order to transmit video information to a conventional transmission channel and store the information in a conventional recording medium, compressing or reducing an amount of digital data is indispensable.

The video coding standards have been developed for compressing video data. Such video coding standards include, for instance, ITU-T standards denoted with H.26x and ISO/IEC standards denoted with MPEG-x. The most up-to-date and advanced video coding standard is currently the standard denoted as the H.264/MPEG-4 AVC standard (see NPL 1).

The coding approach underlying most of these standards consists of the following main stages (a) to (d).

(a) Dividing each individual video frame into pixel blocks of pixels in order to compress the data of each video frame on a block-by-block basis.

(b) Identifying temporal and spatial redundancies by predicting individual blocks from the previous coded video data.

(c) Reducing the identified redundancies by subtracting predicted data from the video data.

(d) Compressing the remaining data by performing Fourier transform, quantization, and entropy coding.

In the current video coding standards, the prediction mode for predicting each macroblock is different for each block. Most of the video coding standards use techniques of motion estimation and motion compensation for predicting video data from a previous coded and decoded frame (inter-frame prediction). Alternatively, block data may be predicted from an adjacent block in the same frame (intra-frame prediction). The H.264/MPEG-4 AVC standard defines some different intra-frame prediction modes for, for example, a reference pixel to be used for prediction or a direction in which a pixel is extrapolated.

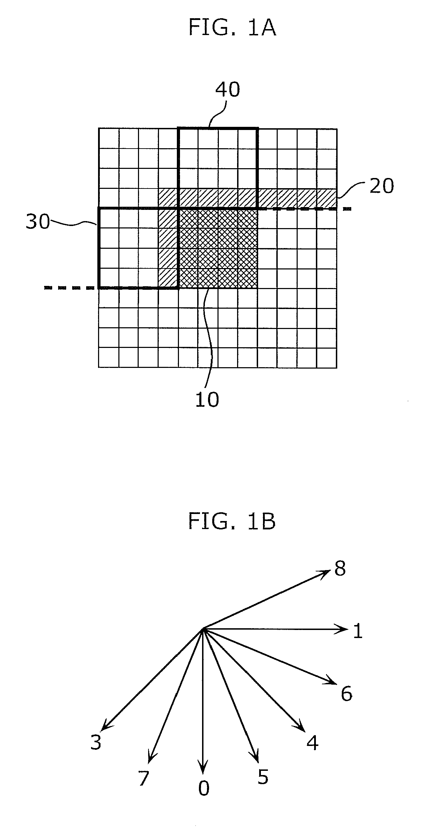

FIG. 1A illustrates an example of a relationship between reference pixels and a current block to be intra-predicted in accordance with the conventional H.264/MPEG-4 AVC standard. Furthermore, FIG. 1B illustrates prediction directions included in the intra-prediction mode set in accordance with the conventional H.264/AVC standard.

As illustrated in FIG. 1A, a current block 10 of 4 x 4 pixels is predicted through an extrapolation of a set of thirteen reference pixels 20 located to the upper and the left of the current block 10 to be predicted. With this prediction, a predicted block corresponding to the current block 10 is generated. In order to perform the extrapolation, one of eight possible extrapolation directions (intra-prediction directions) shown in FIG. 1B is selected. In other words, one of eight directional prediction modes indicating the eight extrapolation directions is selected. Alterntaively, a DC prediction mode, which employs a mean value of the reference pixels 20 for predicting the current block 10, may be selected.

One of the prediction modes is selected for prediction on a macroblock-by-macroblock basis, the coded current block is compressed through entropy-coding, together with information relating to the selected prediction mode to be compressed, and the compressed result is transmitted. Based on a rule determined in accordance with the current video coding standards, an estimate is predicted as the information relating to the selected prediction mode. For example, according to the information indicating the intra-prediction modes defined in accordance with the conventional H.264/AVC standard, the smallest number indicating the prediction method is determined as the estimate of the intra-prediction mode from among the intra-prediction modes of surrounding blocks that have already been coded.

When the estimate to be predicted is equivalent to the information to be coded, only a flag indicating it is transmitted. When the predicted estimate is different from the information to be coded, the information to be coded is transmitted. For example, when the estimate for the intra-prediction mode is equivalent to the prediction mode selected in actual coding, information for reconstructing the selected prediction mode is transmitted.

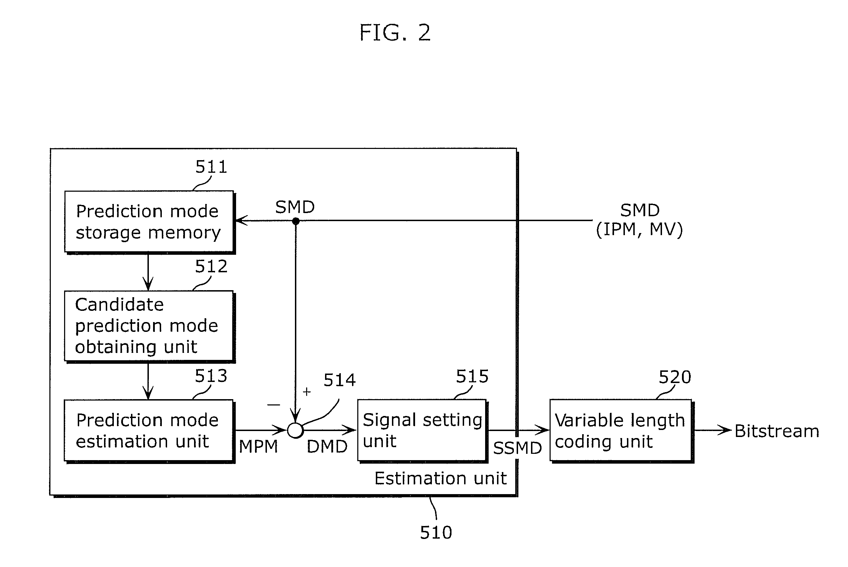

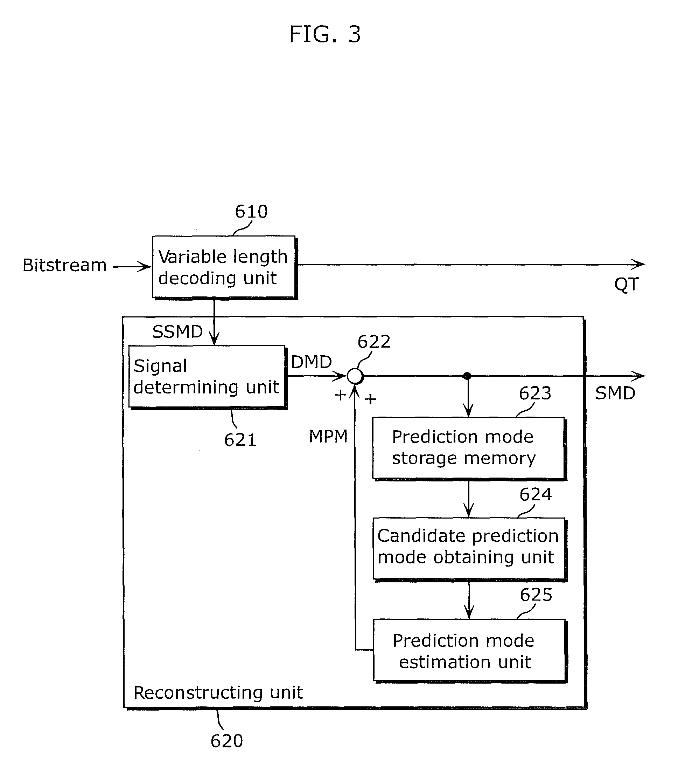

FIG. 2 illustrates an example of a detailed configuration of an estimation unit that estimates a prediction mode, in a configuration of an image coding apparatus in accordance with the conventional H.264/AVC standard. Furthermore, FIG. 3 illustrates an example of a detailed configuration of a reconstructing unit that reconstructs a prediction mode, in a configuration of an image decoding apparatus in accordance with the conventional H.264/AVC standard.

As illustrated in FIG. 2, an estimation unit 510 receives coding mode information SMD indicating a coding mode (the intra-prediction mode or the inter-prediction mode). For example, when the intra-picture prediction coding is selected as a coding mode, the coding mode information SMD is information indicating the intra-prediction mode (an intra-prediction block size, an intra-prediction direction, or others). On the other hand, when the inter-picture prediction coding is selected as a coding mode, the coding mode information SMD is information indicating position information (motion vector) MV.

A prediction mode storage memory 511 is a memory for storing the received coding mode information SMD. A candidate prediction mode obtaining unit 512 obtains, using a predetermined means, candidate prediction mode estimates from the coding mode information SMD already coded and received from the prediction mode storage memory 511.

A prediction mode estimation unit 513 determines a prediction mode estimate MPM from among the candidate prediction mode estimates, and outputs the determined prediction mode estimate MPM. A subtracting unit 514 outputs a difference prediction mode value DMD obtained by subtracting the prediction mode estimate MPM corresponding to each coding mode information SMD of the current block to be coded, from the coding mode information SMD.

A signal setting unit 515 sets, to a coding-prediction-mode related signal SSMD, a flag indicating the same value as the prediction mode estimate MPM, when the difference prediction mode value DMD indicates 0. Furthermore, the signal setting unit 515 outputs information indicating the difference prediction mode value DMD as the coding-prediction-mode related signal SSMD, when the difference prediction mode value DMD is not 0.

A variable length coding unit 520 entropy-codes the coding-prediction-mode related signal SSMD, and outputs it as a bitstream.

Furthermore, as illustrated in FIG. 3, a variable length decoding unit 610 decodes the input bitstream to output quantized frequency transform coefficients QT and the coding-prediction-mode related signal SSMD.

A reconstructing unit 620 receives the coding-prediction-mode related signal SSMD, and outputs the coding mode information SMD (a coding mode MD, and information indicating an intra-prediction mode IPM or position information (motion vector) MV to be used for decoding). More specifically, a signal determining unit 621 receives the coding-prediction-mode related signal SSMD, and outputs the difference prediction mode value DMD as 0 when the coding-prediction-mode related signal SSMD indicates the flag indicating the same value as the prediction mode estimate. Otherwise, the signal determining unit 621 outputs the difference prediction mode value DMD included in the coding-prediction-mode related signal SSMD.

A prediction mode storage memory 623 is a memory for storing the coding mode MD, and the information indicating the intra-prediction mode IPM (an intra-prediction block size, an intra-prediction direction, and others) or position information (motion vector) MV that are received. A candidate prediction mode obtaining unit 624 obtains, using a predetermined means, candidate prediction mode estimates from the coding mode MD that has already been decoded, and the information indicating the intra-prediction mode IPM or the position information (motion vector) MV that are provided from the prediction mode storage memory 623.

A prediction mode estimation unit 625 determines one of the candidate prediction mode estimates as the prediction mode estimate MPM, and outputs the determined prediction mode estimate MPM. An adding unit 622 outputs a result of addition of the difference prediction mode value DMD to the prediction mode estimate MPM as the coding mode information SMD.

One example of a method of estimating the prediction mode estimate MPM for the block size of 4 x 4 pixels using the candidate prediction mode obtaining units 512 and 624, and the prediction mode estimation units 513 and 625 in accordance with the H.264/AVC standard will be described with reference to FIG. 1A.

Each of the candidate prediction mode obtaining units 512 and 624 obtains, in the coding and decoding, an intra-prediction mode IPM_A of a coded (or decoded) surrounding block 30 and an intra-prediction mode IPM_B of a surrounding block 40, with respect to the current block 10 of 4 x 4 pixels. Then, each of the prediction mode estimation units 513 and 625 sets a smaller one of values of IPM_A and IPM_B to the prediction mode estimate MPM.

Meanwhile, video coding methods for compressing video data using edge detection have also been suggested. Here, units that perform the edge detection are sometimes included in coding apparatuses and decoding apparatuses (NPL 2).

[Citation List]

[Non Patent Literature]

[NPL 1] ISO/IEC 14496-10, "MPEG-4 Part 10 Advanced Video Coding"
[NPL 2] 2008 IEEE International Conference on Image Processing, "HIGH PRECISION EDGE PREDICTION FOR INTRA CODING"

[Summary of Invention]

[Technical Problem]

However, the prior art references have the following problems.

In the prior art, similarities between the current block to be coded and the surrounding blocks are not evaluated when the prediction mode of the current block is estimated. Thus, when the image of the current block is different in characteristics from the surrounding blocks, the estimated intra-prediction mode hardly matches a selected prediction mode. Thereby, information indicating a prediction mode different from the estimated intra-prediction mode needs to be transmitted due to the mismatching in the estimation result. Thus, there is a problem that the code amount increases or artifacts occur in a coded image.

In contrast, when the prediction mode estimate matches that of the selected prediction mode, since the current block is different in characteristics from the surrounding blocks, there is a problem that prediction using the surrounding blocks results in poor performance, the code amount increases, or artifacts occur in a coded image. The specific examples will be described hereinafter.

In the intra-prediction mode estimation in accordance with the conventional H.264/AVC standard, the candidate prediction mode is a prediction mode to be used in surrounding blocks of the current block. Here, the prediction mode estimation unit selects a smaller number from among candidate mode numbers of the prediction mode (the numbers in FIG. 1B and the number 2 indicating an average prediction (DC prediction mode)), as a prediction mode estimate.

Thus, the estimated prediction mode of the current block matches the prediction mode of one of the surrounding blocks. However, when the image of the current block is different in characteristics from the surrounding blocks, the prediction mode of the current block hardly matches the estimation result of the prediction mode (estimated prediction mode). In other words, the code amount of information to be transmitted to a decoder and indicating a prediction mode increases. Alternatively, when the estimation result of the prediction mode matches the prediction mode of the current block, since the predicted block of the surrounding blocks having the different characteristics from those of the current block is used, the difference value between the predicted block and the current block increases and the code amount also increases.

In contrast, the prediction performance for estimating the prediction mode will probably be improved by increasing the number of candidate prediction modes before estimating the prediction mode. One of the examples is to set all prediction modes predetermined as candidate prediction modes. The prediction mode estimation unit determines the characteristics of images of the surrounding blocks for all the predetermined prediction modes.

For example, the estimated intra-prediction mode for a surrounding block is determined by generating a predicted block from surrounding blocks around the surrounding block and evaluating the difference between each of the surrounding blocks and the predicted block of the surrounding block. With the means, the prediction efficiency for estimating a prediction mode will be improved, but the computing amount increases. Furthermore, the relationship between the current block and the surrounding blocks are not evaluated with the means. Thus, when the image of the current block is different in characteristics from the images of the surrounding blocks, the prediction results in poor performance as with the means of the conventional H.264/AVC standard.

Thus, the present invention has been conceived in view of the problems, and has an object of providing an image coding method of coding an image and video data and an image decoding method of decoding a coded image and coded video data so that a higher coding efficiency can be achieved, the coding artifacts can be reduced, and the large computing amount is not necessary.

[Solution to Problem]

In order to solve problems, the image decoding method according to an aspect of the present invention is an image decoding method of decoding coded image data that is generated by coding image data on a block-by-block basis according to a prediction based on a prediction mode, and includes: reconstructing a selected prediction mode based on mode information indicating an estimation result of the prediction mode implemented in coding, the selected prediction mode being a prediction mode that has been used for the prediction in coding; and decoding a current block included in the coded image data according to a prediction based on the selected prediction mode to generate a decoded block, wherein the reconstructing includes: detecting an edge in a decoded block previously generated; reducing a plurality of predetermined candidate prediction modes in number, based on the edge detected in the detecting; determining, as an estimated prediction mode, one of the candidate prediction modes reduced in number in the reducing; and reconstructing the selected prediction mode, based on the mode information and the estimated prediction mode.

Thereby, whether or not a direction of the edge detected from the surrounding blocks of the current block points to the current block can be evaluated. Thus, in particular, when the current picture includes a sharp edge, the correlation between the current block and the surrounding blocks can be determined by checking whether an extension of the edge from the surrounding blocks is connected to the current block. Based on a result of the determination, candidate prediction modes can be reduced in number. Thereby, the computing amount necessary for estimating a prediction mode can be reduced. Furthermore, a prediction mode estimate that is more appropriate than that simply estimated from the prediction mode values of the surrounding blocks can be determined. Since a difference between a prediction mode value of the current block and the prediction mode estimate is reduced, the coding efficiency can be improved and coding artifacts can be suppressed.

Furthermore, the mode information may be one of flag information and difference information, the flag information indicating that the prediction mode that has been used for the prediction in coding matches a prediction mode estimated in coding, and the difference information indicating a difference between the prediction mode that has been used for the prediction in coding and the prediction mode estimated in coding, and in the reconstructing of the selected prediction mode, the estimated prediction mode may be determined as the selected prediction mode when the mode information is the flag information, and the selected prediction mode may be reconstructed by adding the difference to the estimated prediction mode when the mode information is the difference information.

Thereby, when the prediction mode used for prediction matches the estimated prediction mode, flag information indicating the matching has only to be included in a bitstream. Thus, the code amount can be reduced.

Furthermore, in the reducing, the candidate prediction modes may be reduced in number based on directions of one or more edges detected in the detecting.

Furthermore, the candidate prediction modes may include a plurality of directional prediction modes that have been predefined, and in the reducing, the candidate prediction modes may be reduced in number by excluding, from the candidate prediction modes, one of the directional prediction modes indicating a direction most distant from the directions of the one or more edges detected in the detecting.

Thereby, the number of directional prediction modes can be reduced by excluding, from the candidates, the directional prediction mode distant from the direction of the edge. Thereby, the computing amount necessary for estimating a prediction mode can be reduced.

Furthermore, in the reducing, a variation between directions of two or more edges detected in the detecting may be computed, and the candidate prediction modes may be reduced in number based on the computed variation.

Thereby, for example, when the variation between the detected edges is smaller, the candidate prediction modes can be narrowed down in consideration of the direction of the detected edge. Thus, the prediction mode estimate in consideration of the direction of the detected edge can be determined, and a more appropriate estimate can be computed.

Furthermore, the candidate prediction modes may include a plurality of prediction modes used when decoded blocks around the current block are generated, and in the reducing, the candidate prediction modes may be reduced in number by reducing the decoded blocks that are computation targets in number, based on the edge detected in the detecting.

Thereby, when the surrounding blocks are used for computing the prediction mode in the determining, the computing amount can be suppressed by computing the prediction mode only using the surrounding block in which an edge has been detected. Since the relevance between the surrounding block in which the edge has been detected and the current block is probably strong, a more appropriate prediction mode estimate can be computed.

Furthermore, in the reducing, the decoded blocks may be reduced in number by excluding, from the computation targets, a decoded block in which no edge is detected in the detecting.

Since the computation targets are narrowed down to the blocks in which an edge has been detected, the computing amount necessary for estimating a prediction mode can be reduced. Furthermore, a more appropriate prediction mode estimate can be computed using the relevance between the surrounding block including the edge and the current block.

Furthermore, in the reducing, the decoded blocks may be reduced in number by (i) determining a maximum edge with a strongest norm from among one or more edges detected in the detecting and (ii) limiting the computation targets to a decoded block in which the maximum edge has been detected.

Furthermore, in the reducing, the computation targets may be limited to decoded blocks to the left of the current block when a horizontal component is larger than a vertical component, and the decoded blocks may be reduced in number by limiting the computation targets to decoded blocks to the upper of the current block when the vertical component is larger than the horizontal component, the horizontal component and the vertical component being of a direction of the edge detected in the detecting.

Furthermore, the image coding method according to an aspect of the present invention is an image coding method of coding image data on a block-by-block basis, and includes: coding a current block included in the image data according to a prediction based on a prediction mode selected from among predetermined candidate prediction modes; decoding the coded current block to generate a decoded block; determining, as an estimated prediction mode, one of the candidate prediction modes; and outputting mode information for reconstructing the selected prediction mode, together with the coded current block, wherein the determining includes: detecting an edge in a decoded block previously generated; reducing the candidate prediction modes in number, based on the edge detected in the detecting; determining, in a predetermined method, one of the candidate prediction modes reduced in number in the reducing as the estimated prediction mode; and generating the mode information, based on the estimated prediction mode and the selected prediction mode.

Thereby, whether or not a direction of the edge detected from the surrounding blocks of the current block points to the current block can be evaluated. Thus, in particular, when the current picture includes a sharp edge, the correlation between the current block and the surrounding blocks can be determined by checking whether an extension of the edge from the surrounding blocks is connected to the current block. Based on a result of the determination, the number of candidate prediction modes can be reduced. Thereby, the computing amount necessary for estimating a prediction mode can be reduced. Furthermore, a prediction mode estimate that is more appropriate than that simply estimated from the prediction mode values of the surrounding blocks can be determined. Since a difference between a prediction mode value of the current block and the prediction mode estimate is reduced, the coding efficiency can be improved and coding artifacts can be suppressed.

Furthermore, in the generating, the estimated prediction mode may be compared with the selected prediction mode, a flag indicating that the estimated prediction mode matches the selected prediction mode may be generated as the mode information when the estimated prediction mode matches the selected prediction mode, and difference information may be generated as the mode information when the estimated prediction mode does not match the selected prediction mode, the difference information indicating a difference between the estimated prediction mode and the selected prediction mode.

Thereby, when the prediction mode used for prediction matches the estimated prediction mode, flag information indicating the matching has only to be included in a bitstream. Thus, the code amount can be reduced.

Furthermore, the candidate prediction modes may include a plurality of directional prediction modes that have been predefined, and in the reducing, the candidate prediction modes may be reduced in number by excluding, from the candidate prediction modes, one of the directional prediction modes indicating a direction most distant from directions of one or more edges detected in the detecting.

Thereby, the number of directional prediction modes can be reduced by excluding, from the candidates, the directional prediction modes distant from the direction of the edge. Thereby, the computing amount necessary for estimating a prediction mode can be reduced.

Furthermore, the candidate prediction modes may include a plurality of prediction modes used when decoded blocks around the current block are generated, and in the reducing, the candidate prediction modes may be reduced in number by reducing the decoded blocks that are computation targets in number, based on the edge detected in the detecting.

Thereby, when the surrounding blocks are used for computing the prediction mode in the determining, the computing amount can be suppressed by computing the prediction mode only using the surrounding block in which an edge has been detected. Since the relevance between the surrounding block in which the edge has been detected and the current block is probably strong, a more appropriate prediction mode estimate can be computed.

Furthermore, in the reducing, the decoded blocks may be reduced in number by excluding, from the computation targets, a decoded block in which no edge is detected in the detecting.

Since the computation targets are narrowed down to the blocks in which an edge has been detected, the computing amount necessary for estimating a prediction mode can be reduced. Furthermore, a more appropriate prediction mode estimate can be computed using the relevance between the surrounding block including an edge and the current block.

Furthermore, in the reducing, the computation targets may be limited to decoded blocks to the left of the current block when a horizontal component is larger than a vertical component, and the decoded blocks may be reduced in number by limiting the computation targets to decoded blocks to the upper of the current block when the vertical component is larger than the horizontal component, the horizontal component and the vertical component being of a direction of the edge detected in the detecting.

The present invention can be implemented not only as an image coding method and an image decoding method, but also as an image coding apparatus and an image decoding apparatus each including processing units corresponding to processing steps included in the image coding method and the image decoding method, respectively. Furthermore, the present invention may be implemented as a program causing a computer to execute these steps. Furthermore, the present invention may be implemented as a recording medium that records the program, such as a computer-readable CD-ROM, and as information, data, or a signal that indicates the program. Furthermore, these program, information, data, and signal may be distributed through a communication network, such as the Internet.

A part or all of the constituent elements included in the respective image coding apparatus and image decoding apparatus may be configured from a single System-Large-Scale Integration (LSI). The system LSI is a super multi-functional LSI manufactured by integrating the constituent elements into a single chip. More specifically, the system LSI is a computer system including a microprocessor, a Read Only Memory (ROM), and Random Access Memory (RAM).

[Advantageous Effects of Invention]

According to the present invention, since a prediction mode estimate can be accurately predicted while suppressing increase in the computing amount, the coding artifacts can be suppressed and the coding efficiency can be improved.

[Brief Description of Drawings]

[FIG. 1A] FIG. 1A illustrates an example of a relationship between reference pixels and the current block in which intra prediction is employed in accordance with the conventional H.264/AVC standard.
[FIG. 1B] FIG. 1B illustrates prediction directions included in the intra-prediction mode set in accordance with the conventional H.264/AVC standard.
[FIG. 2] FIG. 2 illustrates an example of a detailed configuration of an estimation unit that is a part of a configuration of an image coding apparatus in accordance with the conventional H.264/AVC standard.
[FIG. 3] FIG. 3 illustrates a detailed configuration of a reconstructing unit included in an image decoding apparatus in accordance with the conventional H.264/AVC standard.
[FIG. 4] FIG. 4 is a block diagram illustrating an example of a configuration of an image coding apparatus according to Embodiment 1.
[FIG. 5] FIG. 5 is a block diagram illustrating an example of a detailed configuration of an image coding apparatus with hybrid coding scheme according to Embodiment 1.
[FIG. 6] FIG. 6 is a block diagram illustrating an example of a detailed configuration of an estimation unit included in an image coding apparatus according to Embodiment 1.
[FIG. 7A] FIG. 7A is a schematic drawing illustrating a method of detecting an edge and estimating a direction of the detected edge.
[FIG. 7B] FIG. 7B schematically illustrates blocks to which a detected edge belongs.
[FIG. 8] FIG. 8 is a flowchart indicating an example of operations of an image coding apparatus according to Embodiment 1.
[FIG. 9] FIG. 9 is a block diagram illustrating an example of a configuration of an image decoding apparatus according to Embodiment 1.
[FIG. 10] FIG. 10 is a block diagram illustrating an example of a detailed configuration of an image decoding apparatus according to Embodiment 1.
[FIG. 11] FIG. 11 is a block diagram illustrating an example of a detailed configuration of a reconstructing unit included in an image decoding apparatus according to Embodiment 1.
[FIG. 12] FIG. 12 is a flowchart indicating an example of operations of an image decoding apparatus according to Embodiment 1.
[FIG. 13] FIG. 13 is a flowchart indicating an example of an edge detection process according to Embodiment 1.
[FIG. 14] FIG. 14 is a flowchart indicating an example of a prediction mode estimating process according to Embodiment 1.
[FIG. 15A] FIG. 15A schematically illustrates an example of a method of limiting candidate prediction modes using a direction of an edge according to Embodiment 1.
[FIG. 15B] FIG. 15B schematically illustrates an example of a method of limiting candidate prediction modes using a position at which an edge has been detected, according to Embodiment 1.
[FIG. 16] FIG. 16 is a flowchart indicating an example of a process of computing an angle of an edge according to Embodiment 1.
[FIG. 17] FIG. 17 is a flowchart indicating a different example of a prediction mode estimating process according to Embodiment 1.
[FIG. 18] FIG. 18 is a flowchart indicating a different example of a prediction mode estimating process according to Embodiment 1.
[FIG. 19A] FIG. 19A schematically illustrates an example of a method of limiting computation targets using a position at which an edge has been detected, according to Embodiment 1.
[FIG. 19B] FIG. 19B schematically illustrates an example of a method of limiting computation targets using a position at which an edge has been detected, according to Embodiment 1.
[FIG. 20] FIG. 20 schematically illustrates an overall configuration of a content providing system for implementing content distribution services.
[FIG. 21] FIG. 21 illustrates an external view of a cellular phone.
[FIG. 22] FIG. 22 is a block diagram illustrating an example of a configuration of a cellular phone.

[FIG. 23] FIG. 23 schematically illustrates an example of an overall configuration of a digital broadcasting system.
[FIG. 24] FIG. 24 is a block diagram illustrating an example of a configuration of a television.
[FIG. 25] FIG. 25 is a block diagram illustrating an example of a configuration of an information reproducing/recording unit that reads and writes information from or on a recording medium that is an optical disc.
[FIG. 26] FIG. 26 illustrates an example of a configuration of a recording medium that is an optical disc.
[FIG. 27] FIG. 27 is a block diagram illustrating an example of a configuration of an integrated circuit for implementing the image coding method and the image decoding method according to each of Embodiments.

[Description of Embodiments]

(Embodiment 1)

The image coding apparatus according to Embodiment 1 is characterized, when coding an image and video data, by detecting an edge included in surrounding blocks around the current block, reducing the number of candidate prediction modes based on the detected edge, and determining one of the candidate prediction modes reduced in number as an estimated prediction mode.
Furthermore, the image decoding apparatus according to Embodiment 1 is characterized, when decoding a coded image and coded video data, by detecting an edge included in the surrounding blocks, reducing the number of candidate prediction modes based on the detected edge, determining one of the candidate prediction modes reduced in number as an estimated prediction mode, and reconstructing a prediction mode for generating a predicted block, based on the determined estimated prediction mode and mode information transmitted from a coder.
In other words, when the estimated prediction mode is determined, the number of candidate prediction modes are limited based on an edge according to Embodiment 1. Thus, the relevance factor between the estimated prediction mode and a prediction mode selected when a predicted block is actually generated can be increased, and the computing amount necessary for estimating the prediction mode can be suppressed.
First, an image coding apparatus according to Embodiment 1 will be described.

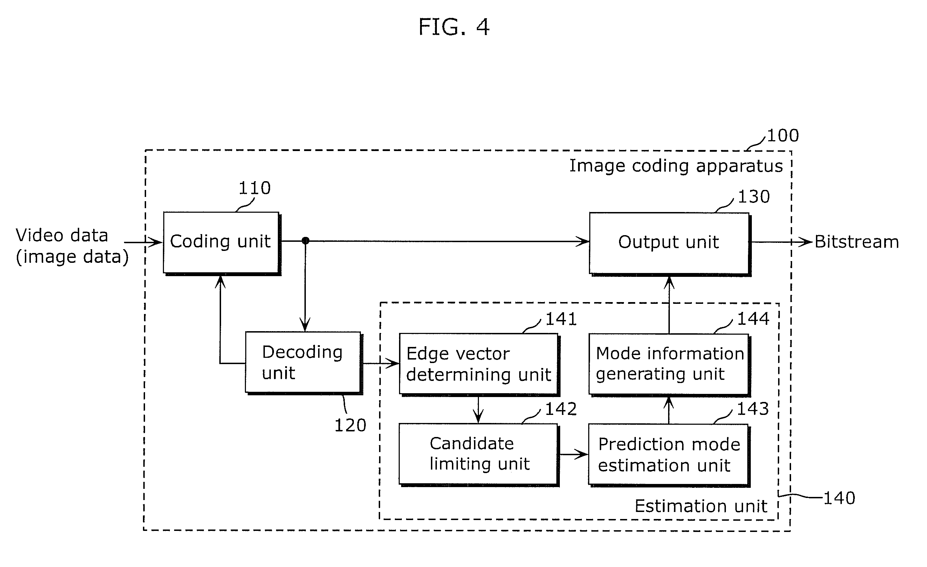

FIG. 4 is a block diagram illustrating an example of a configuration of an image coding apparatus 100 according to Embodiment 1.
The image coding apparatus 100 codes an image and video data that are received, on a block-by-block basis. As illustrated in FIG. 4, the image coding apparatus 100 includes a coding unit 110, a decoding unit 120, an output unit 130, and an estimation unit 140.
The coding unit 110 codes the current block that is one of blocks included in an image and video data, according to a prediction using a prediction mode selected from among the candidate prediction modes.
The candidate prediction modes are all the prediction modes that can be selected in prediction, and include, for example, predefined eight directional prediction modes (see FIG. 1B), the DC prediction mode using an average of reference pixels, and the edge prediction mode indicating a direction of an edge detected in the surrounding blocks. The prediction mode is information indicating a reference destination of an image for referring to a predicted image.
The decoding unit 120 decodes the current block coded by the coding unit 110 to generate a decoded block.
The output unit 130 outputs, as a bitstream, mode information for reconstructing the selected prediction mode used by the coding unit 110, together with the current block coded by the coding unit 110.
The estimation unit 140 determines one of the candidate prediction modes, as an estimated prediction mode. As illustrated in FIG. 4, the estimation unit 140 includes an edge vector determining unit 141, a candidate limiting unit 142, a prediction mode estimation unit 143, and a mode information generating unit 144.
The edge vector determining unit 141 is an example of an edge detection unit according to the present invention, and detects an edge in a decoded block generated by coding and decoding prior to the coding of the current block. For example, the edge vector determining unit 141 detects an edge in the surrounding blocks that are decoded blocks and surround the current block.
The candidate limiting unit 142 reduces the number of candidate prediction modes, based on the edge detected by the edge vector determining unit 141. For example, the candidate limiting unit 142 reduces the number of candidate prediction modes, based on the direction of the detected edge or the pixel position of the detected edge.
Furthermore, for example, when the candidate prediction modes include prediction modes used when generating the surrounding blocks, that is, when the prediction mode estimation unit 143 determines an estimated prediction mode using the prediction modes of the surrounding blocks as the candidate prediction modes, the candidate limiting unit 142 may reduce, based on the detected edge, the number of the candidate prediction modes by reducing the number of the surrounding blocks that are computation targets.
The prediction mode estimation unit 143 determines, as the estimated prediction mode, one of the candidate prediction modes reduced in number by the candidate limiting unit 142.
The mode information generating unit 144 generates mode information, based on the estimated prediction mode determined by the prediction mode estimation unit 143 and the prediction mode selected by the coding unit 110.

With the configuration, the image coding apparatus 100 according to Embodiment 1 is characterized by reducing the number of candidate prediction modes based on the edge detected in the surrounding blocks, and determining, as the estimated prediction mode of the current block, one of the candidate prediction modes reduced in number (limited candidate prediction modes). In other words, the image coding apparatus 100 according to Embodiment 1 is characterized by determining the estimated prediction mode through two steps of narrowing down candidates and determining the prediction mode estimate from among the narrowed down candidates.

For example, when the candidate prediction modes consist of 10 prediction modes in total including eight directional prediction modes, the DC prediction mode, and the edge prediction mode, the image coding apparatus 100 limits the 10 prediction modes to 3 candidate prediction modes in total including the edge prediction mode and two out of the eight directional prediction modes closer to the direction of the detected edge. Then, the image coding apparatus 100 determines the candidate estimated prediction mode from among the limited three candidate prediction modes.

Hereinafter, the detailed configuration and operations of each of the processing units included in the image coding apparatus 100 according to Embodiment 1 will be described.

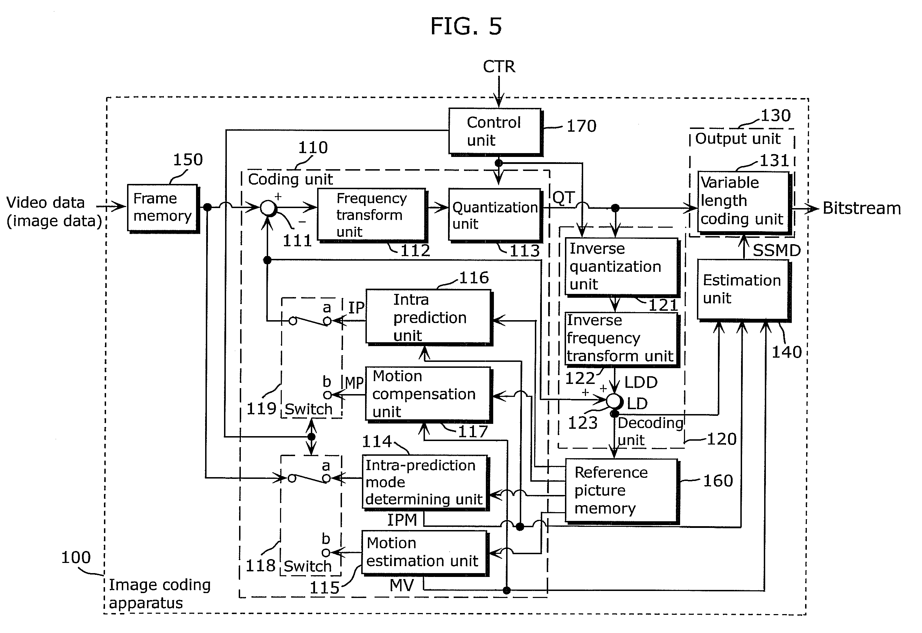

FIG. 5 is a block diagram illustrating an example of a configuration of the image coding apparatus 100 according to Embodiment 1. The image coding apparatus 100 is an image coding apparatus with hybrid coding scheme.

As illustrated in FIG. 5, the image coding apparatus 100 includes the coding unit 110, the decoding unit 120, the output unit 130, a frame memory 150, a reference picture memory 160, and a control unit 170. The same configuration as FIG. 4 is denoted by the same reference numerals.

Furthermore, as illustrated in FIG. 5, the coding unit 110 includes a subtracting unit 111, a frequency transform unit 112, a quantization unit 113, an intra-prediction mode determining unit 114, a motion estimation unit 115, an intra prediction unit 116, a motion compensation unit 117, and switches 118 and 119. The decoding unit 120 includes an inverse quantization unit 121, an inverse frequency transform unit 122, and an adding unit 123. The output unit 130 includes a variable length coding unit 131.

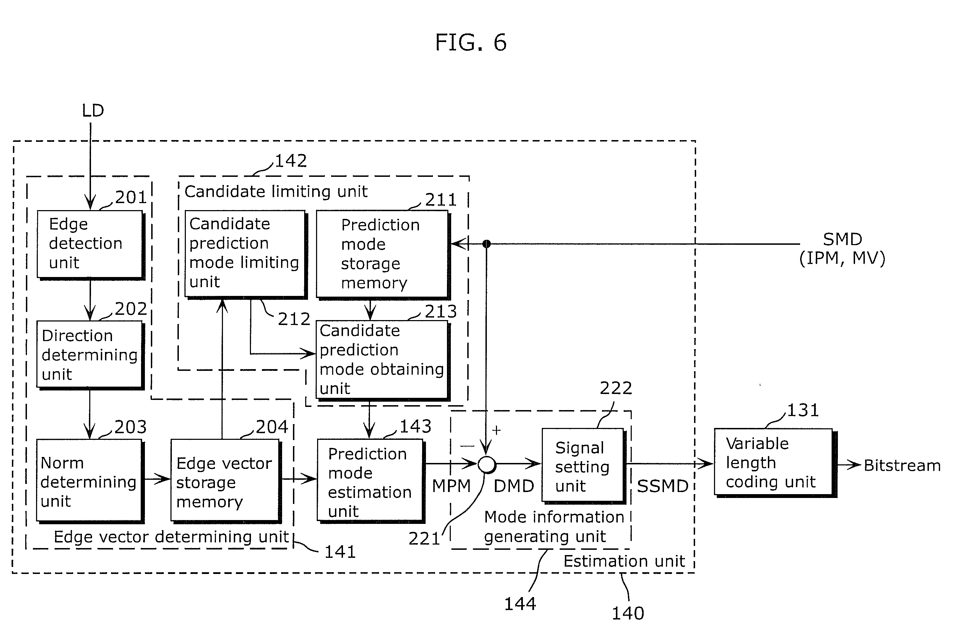

The detailed configuration of the estimation unit 140 will be described with reference to FIG. 6 later.

The processing of each of the processing units will be described hereinafter together with the operations when the image coding apparatus 100 codes input video data including frames.

Each picture of the input video data is stored in the frame memory 150. Each of the pictures is divided into blocks, and is output from the frame memory 150 on a block-by-block basis (for example, per macroblock of horizontal 16 pixels by vertical 16 pixels). The input video data may have any one of the interlaced format and the progressive format.

Each macroblock is coded in one of the intra-prediction mode and the inter-prediction mode. First, the case where the current macroblock is coded in the intra-prediction mode will be described.

In the intra-prediction mode (intra-fame prediction), the macroblock output from the frame memory 150 is fed to the intra-prediction mode determining unit 114 (here, the control unit 170 connects the switch 118 to the terminal "a"). The intra-prediction mode determining unit 114 determines how to perform the intra-prediction on the input macroblock.

More specifically, the intra-prediction mode determining unit 114 needs to determine the intra-prediction block size (one of the following sizes, that is, horizontal 4 pixels by vertical 4 pixels, horizontal 8 pixels by vertical 8 pixels, and horizontal 16 pixels by vertical 16 pixels) and the intra-prediction direction, as the intra-prediction mode (IPM). For example, the intra-prediction mode determining unit 114 determines the intra-prediction block size and the intra-prediction direction such that the code amount generated by coding the current block is smaller than a predetermined threshold. More preferably, the intra-prediction mode determining unit 114 determines the intra-prediction block size and the intra-prediction direction such that the generated code amount is the smallest.

For example, the current block 10 (horizontal 4 pixels by vertical 4 pixels) in FIG. 1A may be predicted according to one of the predefined eight intra-prediction directions, using the reference pixels 20. Here, the reference pixels 20 (hatched rectangles in FIG. 1A) for the intra prediction have already been coded and decoded, and stored in the reference picture memory 160. The information indicating the determined intra-prediction mode IPM is output to the intra prediction unit 116 and the estimation unit 140.

The intra prediction unit 116 obtains reference pixels for the intra prediction (intra-reference pixels) from the reference picture memory 160, based on the intra-prediction mode IPM determined by the intra-prediction mode determining unit 114. Then, the intra prediction unit 116 generates an image IP intra-predicted from pixel values of the reference pixels, and outputs the generated intra-predicted image IP to the subtracting unit 111 (here, the control unit 170 connects the switch 119 to the terminal "a").

The subtracting unit 111 receives, from the frame memory 150, a macroblock (current macroblock) of the picture included in the input video data and the intra-predicted image IP generated by the intra prediction unit 116. Then, the subtracting unit 111 computes a difference (also referred to as prediction residual) between the current macroblock and the intra-predicted image IP to generate a differential image, and outputs the generated differential image to the frequency transform unit 112.

The frequency transform unit 112 performs frequency conversion, such as Discrete Cosine Transform (DCT), on the differential image generated by the subtracting unit 111 to generate frequency transform coefficients, and outputs the generated frequency transform coefficients.

The quantization unit 113 quantizes the frequency transform coefficients generated by the frequency transform unit 112, and outputs the quantized frequency transform coefficients QT. Here, the quantization is to divide the frequency transform coefficients by a predetermined value (quantization step). The quantization step is assumed to be given by the control unit 170 (may be included in a control signal CTL fed to the control unit 170). The quantization unit 113 outputs the quantized frequency transform coefficients QT to the variable length coding unit 131 and the inverse quantization unit 121.

The inverse quantization unit 121 inverse-quantizes the quantized frequency transform coefficients QT, and outputs the inverse-quantized frequency transform coefficients to the inverse frequency transform unit 122. Here, the control unit 170 provides the inverse quantization unit 121 with the same quantization step as that used in the quantization by the quantization unit 113.

The inverse frequency transform unit 122 performs inverse-frequency transformation on the inverse-quantized frequency transform coefficients to generate a decoded differential image LDD. The inverse frequency transform unit 122 outputs the generated decoded differential image LDD to the adding unit 123.

The adding unit 123 adds the decoded differential image LDD to the intra-predicted image IP (or an inter-prediction image to be described later in the inter-prediction mode) to generate a decoded image LD. The adding unit 123 stores the generated decoded image LD in the reference picture memory 160. The decoded image LD stored in the reference picture memory 160 is used as a reference image for coding at a later time.

The variable length coding unit 131 variable length codes (i) the quantized frequency transform coefficients QT provided from the quantization unit 113 and (ii) information indicating the intra-prediction mode IPM and transmitted from the intra-prediction mode determining unit 114 through the estimation unit 140, and outputs a bitstream to be also referenced to as a coded sequence. As described before, the detailed configuration of the estimation unit 140 will be described later with reference to FIG. 6.

Here, one of the variable length coding methods used by the variable length coding unit 131 is the Context-based Adaptive Binary Arithmetic Coding method applied in accordance with the H.264 International Standard for coding moving images. The Context-based Adaptive Binary Arithmetic Coding method is a method of switching between probability tables for the arithmetic coding based on the target data for the variable length coding and data on which the (context-based adaptive) variable length coding has already been performed. Here, the variable length coding unit 131 includes a memory for holding the probability tables.

Here, the variable length coding unit 131 may variable length code the quantized frequency transform coefficients QT using the context-based adaptive variable length coding.

Next, the case where the current macroblock is coded in the inter-prediction mode will be described.

In the inter-prediction mode (inter-frame prediction), a macroblock output from the frame memory 150 is fed to the motion estimation unit 115 (here, the control unit 170 connects the switch 118 to the terminal "b"). The motion estimation unit 115 estimates the motion information (position information (motion vector)) for the reference picture (a reconstructured picture that is held in the reference picture memory 160 and different from the picture to be coded) of the input macroblock.

The position information (motion vector) to be described hereinafter is generally estimated as motion information in the motion estimation. More specifically, the motion information is position information (motion vector) having the smallest weighted sum of (i) a difference value between a predicted image and the current block and (ii) a code amount of position information (motion vector). The detected position information (motion vector) is output to the motion compensation unit 117 and the estimation unit 140 as motion information for the current block.

The motion compensation unit 117 obtains the reference pixels (inter-reference pixels) to be used for the inter prediction, based on the motion estimated by the motion estimation unit 115 (position information (motion vector)) from the reference picture memory 160). Then, the motion compensation unit 117 generates an inter-prediction image MP, and outputs the inter-prediction image MP to the subtracting unit 111 (here, the control unit 170 connects the switch 119 to the terminal "b").

The processes performed by the subtracting unit 111, the frequency transform unit 112, the quantization unit 113, the inverse quantization unit 121, the inverse frequency transform unit 122, and the adding unit 123 are the same as those described for the intra prediction. Thus, the description of these processes will be omitted hereinafter.

The variable length coding unit 131 variable length codes (i) the quantized frequency transform coefficients QT provided from the quantization unit 113 and (ii) mode information including information indicating a coding mode MD and information indicating the intra-prediction mode IPM or motion information (position information (motion vector)) MV that are output from the estimation unit 140, and outputs a bitstream. As described before, the detailed configuration of the estimation unit 140 will be described later with reference to FIG. 6.

Here, when coding the motion information (position information (motion vector)) MV using the Context-based Adaptive Binary Arithmetic Coding method, the variable length coding unit 131 includes the memory for holding the probability tables.

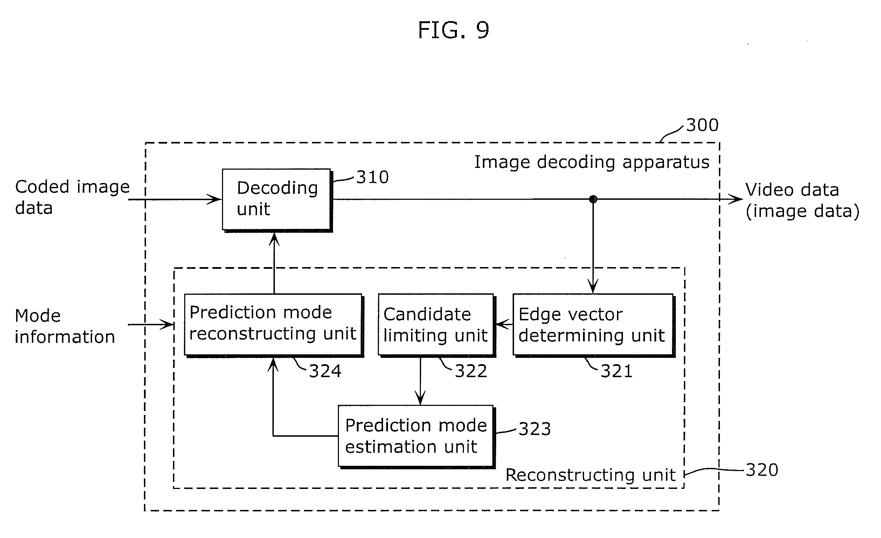

The mode information includes a full set of information necessary for a decoder (for example, an image decoding apparatus 300 (see FIG. 9)) to reproduce the prediction executed by a coder (the image coding apparatus 100) in the process of coding video data. Thus, the mode information defines which coding mode is used for each macroblock, that is, the intra or inter prediction. Furthermore, the mode information also includes information indicating a method of subdividing the macroblock. In accordance with the H.264/AVC standard, the macroblock of 16 x 16 pixels may be subdivided into, for example, blocks of 8 x 8 pixels or 4 x 4 pixels.

According to the coding mode, the mode information includes a set of the position information (position information (motion vector)) to be used for the motion compensation, or information for identifying the intra-prediction mode applied for intra-predicting the current block.

Here, the control unit 170 selects a coding mode (intra-prediction mode or inter-prediction mode).

For example, the control unit 170 selects a coding mode by comparing the current block image IMG, with the inter-predicted image IP generated based on the intra-prediction mode IPM and the decoded image LD or the inter-predicted image MP generated based on the position information (motion vector) MV and the decoded image LD. The control unit 170 generally selects a coding mode having the smallest weighted sum of an amount of bits to be generated and the coding artifacts.

For example, the control unit 170 may use a cost function using the bit rate in accordance with the H.264/AVC standard and the coding artifacts in order to determine the best prediction mode for coding the current block. The differential image is orthogonal transformed, quantized, and variable-length coded for each of the prediction modes. Then, the bit rate and the coding artifacts are computed for each of the prediction modes. Here, the Lagrangian cost function J expressed by Equation 1 is used as the cost function.

[Math. 1]

$$J = D + \lambda \cdot R \qquad \text{(Equation 1)}$$

In Equation 1, R denotes the bit rate to be used for coding the differential image (also referred to as prediction residual) and the prediction mode information, D denotes the coding artifacts, and $\lambda$ denotes a Lagrange multiplier to be computed according to the quantization parameter QP selected for coding. The control unit 170 selects a prediction mode in which the cost function J is the smallest, as a prediction mode for predicting the current block.

Here, the control unit 170 includes a memory for temporarily storing the cost function J in order to select the best prediction mode.

FIG. 6 illustrates an example of a detailed configuration of the estimation unit 140 according to Embodiment 1. As illustrated in FIG. 6, the estimation unit 140 includes the edge vector determining unit 141, the candidate limiting unit 142, the prediction mode estimation unit 143, and the mode information generating unit 144. The same constituent elements as those in FIG. 4 are denoted by the same reference numerals.

Furthermore, as illustrated in FIG. 6, the edge vector determining unit 141 includes an edge detection unit 201, a direction determining unit 202, a norm determining unit 203, and an edge vector storage memory 204. The candidate limiting unit 142 includes a prediction mode storage memory 211, a candidate prediction mode limiting unit 212, and a candidate prediction mode obtaining unit 213. The mode information generating unit 144 includes a subtracting unit 221, and a signal setting unit 222.

Here, the estimation unit 140 receives the coding mode information SMD indicating a coding mode (the intra-prediction mode or the inter-prediction mode) selected by the control unit 170. For example, when an intra-picture prediction coding is selected as a coding mode, the coding mode information SMD is information indicating the intra-prediction mode IPM (an intra-prediction block size, an intra-prediction direction, or others). On the other hand, when the inter-picture prediction coding is selected as a coding mode, the coding mode information SMD is information indicating position information (motion vector) MV.

The prediction mode storage memory 211 is a memory for storing the received coding mode information SMD. The prediction mode obtaining unit 213 obtains candidate prediction mode estimates from the coding mode information SMD that has already been coded and provided from the prediction mode storage memory 211.

Here, the candidate prediction mode obtaining unit 213 is restricted from obtaining the candidate prediction mode estimates, according to limited information provided from the candidate prediction mode limiting unit 212. The candidate prediction mode limiting unit 212 generates the number of candidate prediction modes or the limited information for limiting a computation range, based on a result of the edge detection process by the edge vector determining unit 141, and outputs the number or the information to the candidate prediction mode obtaining unit 213. The prediction mode obtaining unit 213 obtains the limited number of candidate prediction mode estimates from the prediction mode storage memory 211.

The prediction mode estimation unit 143 determines a prediction mode estimate MPM from among the limited number of candidate prediction mode estimates based on the edge vector information output from the edge vector determining unit 141, and outputs the determined prediction mode estimate MPM. The detailed configuration of the edge vector determining unit 141 and the operations of the prediction mode estimation unit 143 will be described later.

The subtracting unit 221 outputs a difference prediction mode value DMD obtained by subtracting the prediction mode estimate MPM corresponding to each coding mode information SMD of the current block to be coded, from the coding mode information SMD. The signal setting unit 222 sets, to a coding-prediction-mode related signal SSMD, a flag indicating that the coding mode information SMD is equivalent to the prediction mode estimate MPM, when the difference prediction mode value DMD indicates 0. Furthermore, the signal setting unit 222 outputs information indicating the difference prediction mode value DMD as the coding-prediction-mode related signal SSMD, when the difference prediction mode value is not 0.

As such, the mode information generating unit 144 generates the coding-prediction-mode related signal SSMD that is an example of the mode information. In summary, the mode information generating unit 144 compares an estimated prediction mode (prediction mode estimate MPM) and the selected prediction mode (the coding mode information SMD). When the estimated prediction mode matches the selected prediction mode, the mode information generating unit 144 generates a flag indicating the matching as mode information. When the estimated prediction mode does not match the selected prediction mode, the mode information generating unit 144 generates difference information (difference prediction mode value DMD) indicating the difference between the estimated prediction mode and the selected prediction mode.

The variable length coding unit 131 entropy-codes the coding-prediction-mode related signal SSMD, and outputs it as a bitstream.

Next, the detailed configuration of the edge vector determining unit 141 will be described.

The edge detection unit 201 reads the decoded image LD from the reference picture memory 160, and detects an edge included in the read image. For example, the edge detection unit 201 computes a gradient vector field of the reference image, and detects the edge by evaluating a norm of gradients which reach a maximum value of an edge. The direction of the edge is obtained from a vector that is perpendicular to a direction of a corresponding gradient.

A reference image for the edge detection is made up of pixels included in a block that has already been coded and decoded, out of pixels belonging to blocks directly adjacent to the current block. Gradient values are computed in the neighboring pixels using the vertical and horizontal Sobel operators as expressed in the following Equation 2.

[Math. 2]

$$Sobel_x = \begin{bmatrix} -1 & 0 & 1 \\ -2 & 0 & 2 \\ -1 & 0 & 1 \end{bmatrix},\quad Sobel_y = \begin{bmatrix} -1 & -2 & -1 \\ 0 & 0 & 0 \\ 1 & 2 & 1 \end{bmatrix} \qquad \text{(Equation 2)}$$

The edge detection unit 201 computes a magnitude of a gradient (gradient value) of a corresponding pixel in a horizontal direction and a vertical direction for each pixel, using the vertical and horizontal Sobel operators. The direction of the corresponding gradient is determined for each pixel by combining vectors of gradient values in the computed horizontal direction and vertical direction.

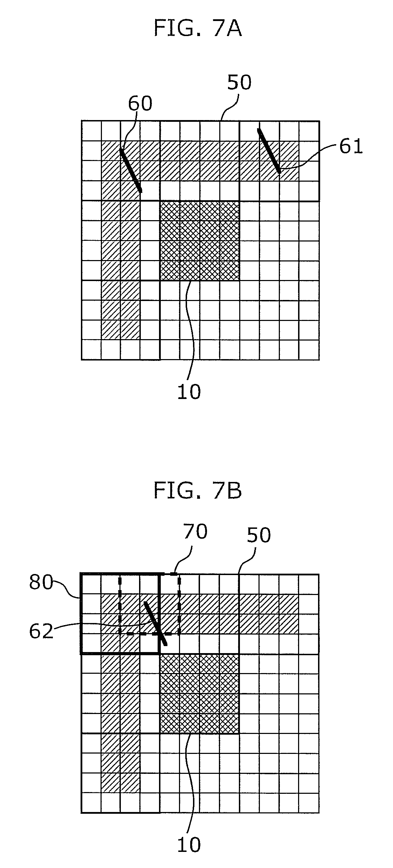

FIG. 7A is a schematic drawing illustrating a method of detecting an edge and estimating a direction of the detected edge.

A region left-diagonally hatched represents pixels of surrounding blocks 50 that are considered for computing gradients. The edge detection unit 201 computes a gradient value for each of the pixels left-diagonally hatched in FIG. 7A, using Equation 2, computes a direction of a gradient using the computed gradient value, and determines a direction perpendicular to the computed direction as a direction of the edge. A vector of the direction perpendicular to the direction of the gradient is referred to as an edge vector. Here, a norm of the edge vector is, for example, equivalent to a norm of a gradient vector of a pixel having the edge vector detected.

Furthermore, FIG. 7B schematically illustrates a block to which an edge belongs.

For example, when pixels in a range enclosed by an edge detection window 70 are searched for the edge detection, an edge 62 in a pixel position is assumed to be an edge as a result of the search. In other words, the block to which the edge 62 belongs is determined as a surrounding block 80 that is a block of 4 × 4 pixels.

Back to FIG. 6, the direction determining unit 202 determines whether or not the direction of the edge detected by the edge detection unit 201 points to the current block for which a prediction mode is estimated. For example, when an edge 60 in FIG. 7A is detected, the current block 10 includes an extension of the edge 60. Thus, the direction determining unit 202 determines that the edge 60 points to the current block 10 for which the prediction mode is estimated. On the other hand, when an edge 61 in FIG. 7A is detected, the current block 10 does not include an extension of the edge 61. Thus, the direction determining unit 202 determines that the edge 61 does not point to the current block 10 for which the prediction mode is estimated.

The norm determining unit 203 computes a norm of an edge determined by the direction determining unit 202 as pointing to the current block for which the prediction mode is estimated, and determines whether or not the computed norm is larger than a predetermined threshold. The norm of an edge is a norm of an edge vector or a gradient vector. The norm determining unit 203 determines that the edge is detected when the computed norm is larger than the predetermined threshold. Furthermore, the norm determining unit 203 determines that the edge is not detected when the computed norm is not larger than the predetermined threshold. The threshold used herein is empirically selected, for example, based on the comparison of differences between different norms of maximum vectors and between different sequences including both sharp edges and smooth areas.

The edge vector storage memory 204 is a memory for storing the position information and the edge vector of the edge determined by the norm determining unit 203 as an edge. The candidate prediction mode limiting unit 212 reduces the number of candidate prediction modes, based on the edge vector stored in the edge vector storage memory 204. Furthermore, the prediction mode estimation unit 143 determines, as a prediction mode estimate, one of the candidate prediction modes limited in number and obtained by the candidate prediction mode obtaining unit 213, depending on whether or not an edge has been detected.

Hereinafter, the processing that the prediction mode estimation unit 143 determines one of the candidate prediction modes limited in number as a prediction mode estimate based on the edge detected by the edge vector determining unit 141 will be described.

More specifically, when the norm of an edge vector is not larger than a threshold, that is, when no edge is detected, the prediction mode estimation unit 143 determines, as the prediction mode estimate, one of the candidate prediction modes limited in number and output from the candidate prediction mode obtaining unit 213 in a conventional predetermined method. The predetermined method for determining a prediction mode estimate is to determine, when the current block is predicted in the intra-prediction mode, the mode number having the smallest coding mode number from among the prediction modes of surrounding blocks as a prediction mode estimate MPM, in accordance with the H.264 video coding standard. On the other hand, when the current block is predicted in the inter-prediction mode, a median of position information of the surrounding blocks is determined as the prediction mode estimate MPM in accordance with the H.264 video coding standard.

When a norm of an edge vector (or gradient vector) is larger than a threshold, that is, when an edge is detected, the prediction mode estimation unit 143 determines, as the prediction mode estimate MPM, the number of the prediction mode of a surrounding block to which an edge with the strongest norm belongs, from among the limited number of candidate prediction modes output from the candidate prediction mode obtaining unit 213. The prediction mode estimation unit 143 determines, as the prediction mode estimate MPM and for the estimate value of the position information in the inter-coding mode, the position information value of the surrounding block to which the edge with the strongest norm belongs.

The prediction mode estimation unit 143 may determine the prediction mode estimate MPM based on information other than edges. For example, regardless of the presence and absence of an edge, the prediction mode estimation unit 143 may determine the mode number having the smallest coding mode number from among the prediction modes of the surrounding blocks, as the prediction mode estimate MPM as in the conventional manner.

Next, operations of the image coding apparatus 100 according to Embodiment 1 will be described.

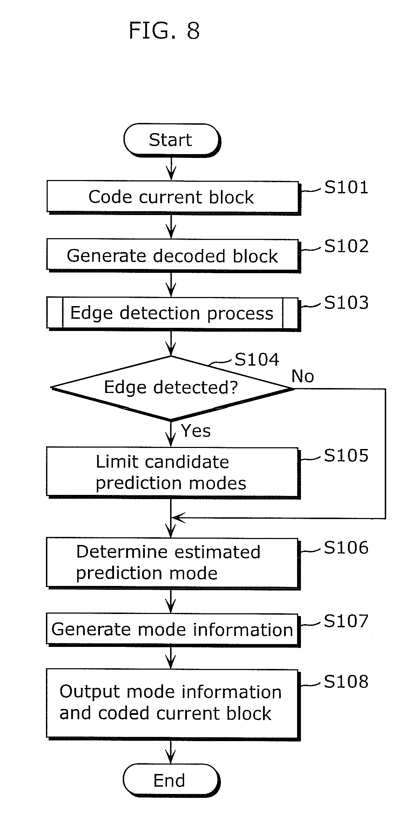

FIG. 8 is a flowchart indicating an example of the operations of the image coding apparatus 100 according to Embodiment 1.

First, the coding unit 110 codes the current block according to a prediction using a prediction mode selected from among the candidate prediction modes (S101). More specifically, the coding unit 110 generates a predicted block using the selected prediction mode, and transforms and quantizes a difference (prediction error) between the generated predicted block and the current block.

Next, the decoding unit 120 decodes the coded current block to generate a decoded block (S102). More specifically, the decoding unit 120 inverse-quantizes and inverse-transforms the prediction error transformed and quantized to generate a decoded difference block, and adds the generated decoded difference block to the predicted block to generate a decoded block. The generated decoded block is stored in the reference picture memory 160.

Next, the edge vector determining unit 141 performs an edge detection process (S103). More specifically, the edge vector determining unit 141 detects an edge that is included in a decoded block previously generated and is located around the current block. The detailed operations of the edge detection process will be described later.

When an edge is detected in the edge detection process (Yes at S104), the candidate limiting unit 142 reduces the number of the candidate prediction modes based on the detected edge (S105). For example, the candidate limiting unit 142 reduces the number of candidate prediction modes, based on the angle of the detected edge or the pixel position at which the edge has been detected.

Then, the prediction mode estimation unit 143 determines one of the candidate prediction modes reduced in number, as an estimated prediction mode (S106). When no edge is detected in the edge detection process (No at S104), the prediction mode estimation unit 143 determines an estimated prediction mode from among all the candidate prediction modes.

Next, the mode information generating unit 144 generates mode information for reconstructing a selected prediction mode, based on the determined estimated prediction mode and the selected prediction mode (S107).

Finally, the output unit 130 outputs the mode information and the coded current block as a bitstream (S108). For example, the variable length coding unit 131 included in the output unit 130 entropy-codes the mode information and the prediction error transformed and quantized.

As described above, the image coding apparatus 100 according to Embodiment 1 limits the number of candidate prediction modes according to a result of the edge detection and determines one of the candidate prediction modes limited in number as an estimate of the current block, when determining the estimate. Then, the image coding apparatus 100 determines a value to be actually coded by computing a difference between the determined estimate value and a value of the prediction mode used when a predicted block of the current block is generated.

Next, a configuration of the image decoding apparatus 300 will be described.

FIG. 9 is a block diagram illustrating an example of a configuration of the image decoding apparatus 300 according to Embodiment 1.

The image decoding apparatus 300 decodes coded image data generated by coding image data on a block-by-block basis according to a prediction using a prediction mode. As illustrated in FIG. 9, the image decoding apparatus 300 includes a decoding unit 310 and a reconstructing unit 320.

The decoding unit 310 decodes the current block that is one of blocks included in the coded image data, according to a prediction using a selected prediction mode reconstructured by the reconstructing unit 320 to generate a decoded block. The generated decoded block is output as an image and video data. The candidate prediction modes are all the prediction modes selectable in prediction as in the image coding apparatus, and includes, for example, eight directional prediction modes, the DC prediction mode, and the edge prediction mode.

The reconstructing unit 320 reconstructs a selected prediction mode from among the candidate prediction modes, based on the mode information for reconstructing a prediction mode selected in coding. Here, the mode information is information indicating a result of estimation of the prediction mode in coding. As illustrated in FIG. 9, the reconstructing unit 320 includes an edge vector determining unit 321, a candidate limiting unit 322, a prediction mode estimation unit 323, and a prediction mode reconstructing unit 324.

The edge vector determining unit 321 is an example of an edge detection unit according to the present invention, and detects an edge in a block decoded prior to decoding of the current block. For example, the edge vector determining unit 321 detects an edge included in the surrounding blocks that are decoded blocks located around the current block.

The candidate limiting unit 322 reduces the number of candidate prediction modes, based on the edge detected by the edge vector determining unit 321. For example, the candidate limiting unit 322 reduces the number of candidate prediction modes, based on the direction of the detected edge or the pixel position of the detected edge.

Furthermore, for example, when the candidate prediction modes include prediction modes used when generating the surrounding blocks, that is, when the prediction mode estimation unit 323 determines an estimated prediction mode, from among the prediction modes of the surrounding blocks as the candidate prediction modes, the candidate limiting unit 322 may reduce, based on the detected edge, the number of the candidate prediction modes by reducing the number of the surrounding blocks that are computation targets.

The prediction mode estimation unit 323 determines the estimated prediction mode from among the candidate prediction modes reduced in number by the candidate limiting unit 322.

The prediction mode reconstructing unit 324 reconstructs a selected prediction mode, based on the estimated prediction mode and the mode information.

With the configuration, the image decoding apparatus 300 according to Embodiment 1 is characterized by reducing the number of the candidate prediction modes based on the edge detected in the surrounding blocks, and determining the estimated candidate prediction mode of the current block from among the candidate prediction modes reduced in number (limited candidate prediction modes). In other words, the image decoding apparatus 300 according to Embodiment 1 is characterized by determining the estimated prediction mode through two steps of narrowing down candidates and determining the prediction mode estimate from among the narrowed down candidates.

Hereinafter, the detailed configuration and operations of each of the processing units included in the image decoding apparatus 300 according to Embodiment 1 will be described.

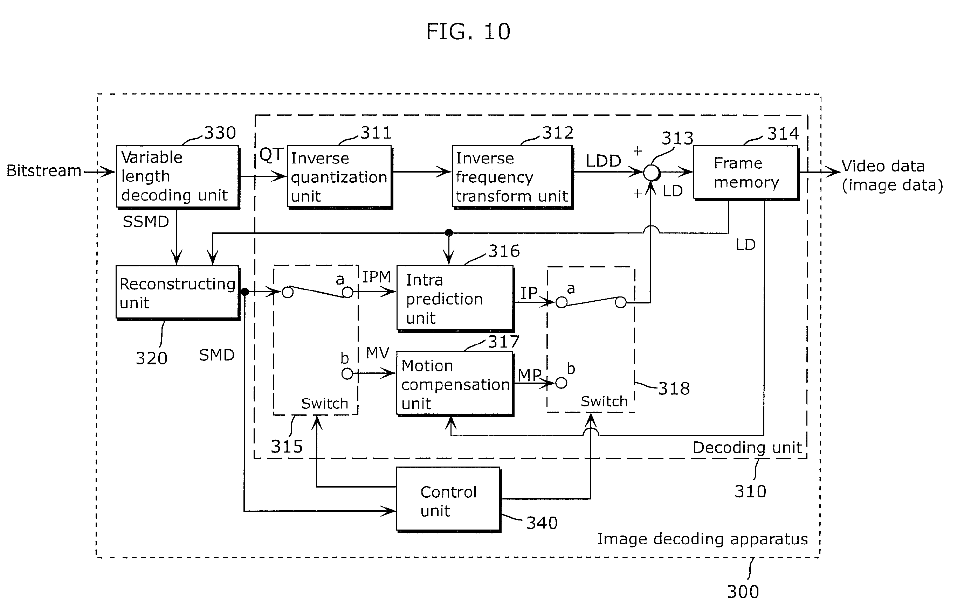

FIG. 10 is a block diagram illustrating an example of the detailed configuration of the image decoding apparatus 300 according to Embodiment 1. As illustrated in FIG. 10, the image decoding apparatus 300 includes the decoding unit 310, the reconstructing unit 320, a variable length decoding unit 330, and a control unit 340.

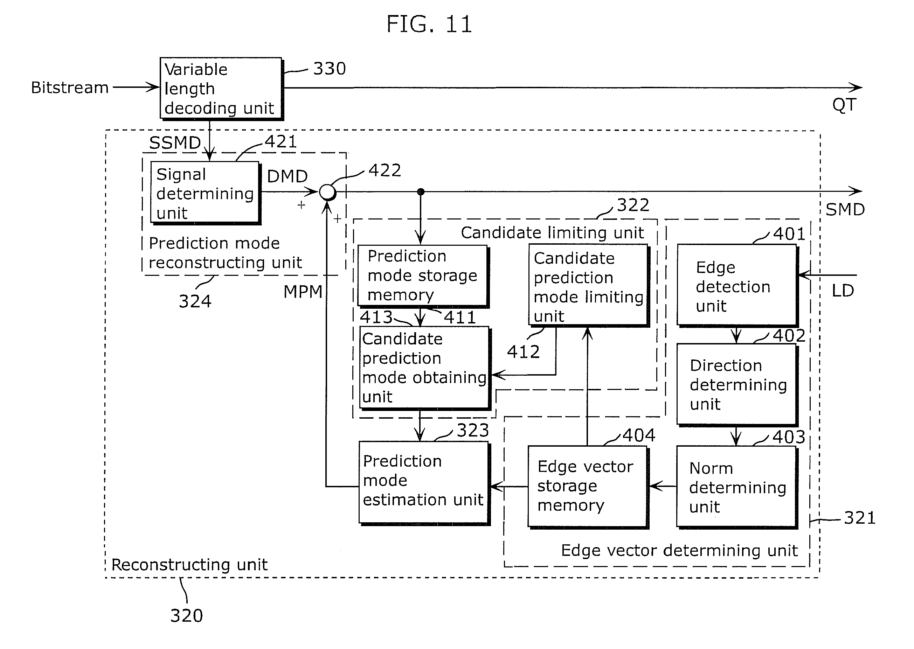

Furthermore, as illustrated in FIG. 10, the decoding unit 310 includes an inverse quantization unit 311, an inverse frequency transform unit 312, an adding unit 313, a frame memory 314, a switch 315, an intra prediction unit 316, a motion compensation unit 317, and a switch 318. Here, the detailed configuration of the reconstructing unit 320 will be described later with reference to FIG. 11.

The processing of each of the processing units will be described hereinafter according to the operations when the image decoding apparatus 300 decodes a bitstream (coded video data). The image decoding apparatus 300 according to Embodiment 1 decodes the coded video data including prediction residual, on a block-by-block basis as intra or inter predictive coded block, and outputs the block as video data or image data.

The variable length decoding unit 330 variable-length decodes a bitstream using a predetermined means, and outputs the quantized frequency transform coefficients QT and the coding-prediction-mode related signal SSMD. The reconstructing unit 320 receives the coding-prediction-mode related signal SSMD and a decoded image signal LD, and outputs information indicating the coding mode MD, and the intra-prediction mode IPM or the position information (motion vector) MV. As described above, the detailed configuration of the reconstructing unit 320 will be described later with reference to FIG. 11.

The control unit 340 receives the coding mode MD, the switch 315 receives the information indicating the intra-prediction mode IPM or the position information (motion vector) MV, and the inverse quantization unit 311 receives the quantized frequency transform coefficients QT.

The control unit 340 controls the switches 315 and 318 based on the coding mode MD. When the coding mode MD indicates the intra-prediction coding, the control unit 340 connects the switch 315 to the terminal "a", and provides the information indicating the intra-prediction mode IPM to the intra prediction unit 316. When the coding mode MD indicates the inter-prediction coding, the control unit 340 connects the switch 315 to the terminal "b", and provides the position information (motion vector) MV to the motion compensation unit 317.

When the current block is an intra-predicted coded block, the control unit 340 connects the switches 315 and 318 to the terminal "a". Thus, the intra prediction unit 316 receives the information indicating the intra-prediction mode IPM, and the inverse quantization unit 311 receives the quantized frequency transform coefficients QT. Here, the quantized frequency transform coefficients QT correspond to the prediction error coded by a coder (for example, the image coding apparatus 100).

The intra prediction unit 316 obtains an intra-predicted reference pixel from the frame memory 314 based on the received intra-prediction mode IPM, generates an intra-predicted image (predicted block), and outputs the intra-predicted image to the adding unit 313.

The inverse quantization unit 311 inverse-quantizes the quantized frequency transform coefficients QT, and outputs the inverse-quantized frequency transform coefficients to the inverse frequency transform unit 312. Then, the inverse frequency transform unit 312 performs inverse-frequency transformation on the inverse-quantized frequency transform coefficients to generate a decoded differential image LDD. The inverse frequency transform unit 312 outputs the generated decoded differential image LDD to the adding unit 313.

The adding unit 313 adds the decoded differential image LDD to the intra-predicted image IP to generate a decoded image LD. The generated decoded block is stored in the frame memory 314. The decoded image stored in the frame memory 314 is used as a reference picture for decoding at a later time. Furthermore, the decoded image is output so as to be included in the decoded video data.

When the current block is an inter-predicted block, the control unit 340 connects the switches 315 and 318 to the terminal "b". Then, the motion compensation unit 317 receives the position information (motion vector) MV, and the inverse quantization unit 311 receives the quantized frequency transform coefficients QT.

The motion compensation unit 317 obtains the reference pixel from the frame memory 314 based on the received position information (motion vector) MV, generates a predicted picture, and outputs the predicted picture to the adding unit 313.

The processes by the inverse quantization unit 311, the inverse frequency transform unit 312, and the adding unit 313 are the same as those described for processing the intra-predicted block. The decoded image LD is stored in the frame memory 314. The decoded image stored in the frame memory 314 is used as a reference picture for decoding at a later time. Furthermore, the decoded image is output so as to be included in the decoded video data.

Next, a detailed configuration of the reconstructing unit 320 according to Embodiment 1 will be described with reference to FIG. 11.

FIG. 11 illustrates an example of the detailed configuration of the reconstructing unit 320 according to Embodiment 1. As illustrated in FIGS. 11 and 9, the reconstructing unit 320 includes the edge vector determining unit 321, the candidate limiting unit 322, the prediction mode estimation unit 323, and the prediction mode reconstructing unit 324.

Furthermore, the edge vector determining unit 321 includes an edge detection unit 401, a direction determining unit 402, a norm determining unit 403, and an edge vector storage memory 404. Moreover, the candidate limiting unit 322 includes a prediction mode storage memory 411, a candidate prediction mode limiting unit 412, and a candidate prediction mode obtaining unit 413. Moreover, the prediction mode reconstructing unit 324 includes a signal determining unit 421 and an adding unit 422.

The reconstructing unit 320 receives the coding-prediction-mode related signal SSMD and a previously decoded image signal LD, and outputs information indicating the intra-prediction mode IPM or the position information (motion vector) MV as the coding mode information SMD.

More specifically, the signal determining unit 421 outputs the difference prediction mode value DMD as 0 when the coding-prediction-mode related signal SSMD indicates the flag indicating the same value as the prediction mode estimate. Otherwise, the signal determining unit 421 outputs the difference prediction mode value DMD included in the coding-prediction-mode related signal SSMD.

The prediction mode storage memory 411 is a memory for storing the received coding mode MD, and the information indicating the intra-prediction mode IPM (an intra-prediction block size, an intra-prediction direction, or others) or the position information (motion vector) MV. The candidate prediction mode obtaining unit 413 obtains candidate prediction mode estimates using a predetermined means, from the coding mode MD that has already been decoded and the information indicating the intra-prediction mode IPM or the position information (motion vector) MV that are provided from the prediction mode storage memory 411.

Here, the candidate prediction mode obtaining unit 413 is restricted from obtaining the candidate prediction mode estimates, according to the limited information provided from the candidate prediction mode limiting unit 412. The candidate prediction mode limiting unit 412 generates the number of candidate prediction modes or the limited information for limiting a computation range, based on a result of the edge detection process by the edge vector determining unit 321, and outputs the number or the information to the candidate prediction mode obtaining unit 413. The candidate prediction mode obtaining unit 413 obtains the limited number of candidate prediction mode estimates from the prediction mode storage memory 411.

The prediction mode estimation unit 323 determines one of the candidate prediction mode estimates limited in number as a prediction mode estimate MPM, based on the edge vector information output from the edge vector determining unit 321, and outputs the determined prediction mode estimate MPM. The adding unit 422 outputs a result of addition of the difference prediction mode value DMD to the prediction mode estimate MPM as the coding mode information SMD.

As such, when the coding-prediction-mode related signal SSMD that is an example of mode information indicates flag information, the prediction mode reconstructing unit 324 determines an estimated prediction mode (prediction mode estimate MPM) as a selected prediction mode (coding mode information SMD). When the coding-prediction-mode related signal SSMD indicates difference information (difference prediction mode value DMD) indicating a difference between the estimated prediction mode and the selected prediction mode, the prediction mode reconstructing unit 324 reconstructs the selected prediction mode by adding the difference to the estimated prediction mode.

The configuration of the edge vector determining unit 321 and the operations of the prediction mode estimation unit 323 will be described later in detail.

As described above, the edge vector determining unit 321 includes the edge detection unit 401, the direction determining unit 402, the norm determining unit 403, and the edge vector storage memory 404.

The edge detection unit 401 reads the previously decoded image signal LD, and detects an edge included in the read image. The details of the edge detection process are the same as those performed by the edge detection unit 201.

The direction determining unit 402 determines whether or not the direction of the edge detected by the edge detection unit 401 points to the current block for which the prediction mode is estimated. The details of the edge direction determination process are the same as those performed by the direction determining unit 202.

The norm determining unit 403 computes a norm of the edge determined by the edge detection unit 401 as pointing to the current block for which the prediction mode is estimated, and determines whether or not the computed norm is larger than a predetermined threshold. The predetermined threshold is desirably the same threshold for use in the norm determination process in coding. Thus, when the threshold is not a value unique to a device, a coding apparatus notifies the predetermined threshold. The details of the norm determination process are the same as those performed by the norm determining unit 203.

The edge vector storage memory 404 is a memory for storing the position information and the edge vector of the edge determined by the norm determining unit 403 as an edge. The candidate prediction mode limiting unit 412 reduces the number of candidate prediction modes, based on the edge vector stored in the edge vector storage memory 404. Furthermore, when estimating a prediction mode of the current block, the prediction mode estimation unit 323 determines, as a prediction mode estimate, one of the candidate prediction modes obtained by the prediction mode obtaining unit 413, depending on whether or not an edge has been detected.

Hereinafter, the processing that the prediction mode estimation unit 323 determines one of the candidate prediction modes limited in number as a prediction mode estimate, based on the edge detected by the edge vector determining unit 321 will be described.

More specifically, when the norm of an edge vector is not larger than a threshold, that is, when no edge is detected, the prediction mode estimation unit 323 determines, as the prediction mode estimate, one of the limited number of candidate prediction modes output from the prediction mode obtaining unit 413, in a conventional predetermined method. The predetermined method for determining a prediction mode estimate is to determine, when the current block is predicted in the intra-prediction mode, the mode number having the smallest coding mode number from among the prediction modes of surrounding blocks as a prediction mode estimate MPM, in accordance with the H.264 video coding standard. On the other hand, when the current block is predicted in the inter-prediction mode, a median of position information of the surrounding blocks is determined as the prediction mode estimate MPM in accordance with the H. 264 video coding standard.

When a norm of an edge vector (or gradient vector) is larger than a threshold, that is, when an edge is detected, the prediction mode estimation unit 323 determines, as the prediction mode estimate MPM, the number of the prediction mode of a surrounding block to which an edge with the strongest norm belongs from among the limited number of candidate prediction modes output from the prediction mode obtaining unit 413. The prediction mode estimation unit 323 determines, as the prediction mode estimate MPM and for the estimate value of the position information in the inter-coding mode, the position information value of the surrounding block to which the edge with the strongest norm belongs.

The prediction mode estimation unit 323 may determine the prediction mode estimate MPM based on information other than edges. For example, regardless of the presence and absence of an edge, the prediction mode estimation unit 323 may determine the mode number having the smallest coding mode number from among the prediction modes of the surrounding blocks, as the prediction mode estimate MPM as in the conventional manner.

Next, the operations of the image decoding apparatus 300 will be described.

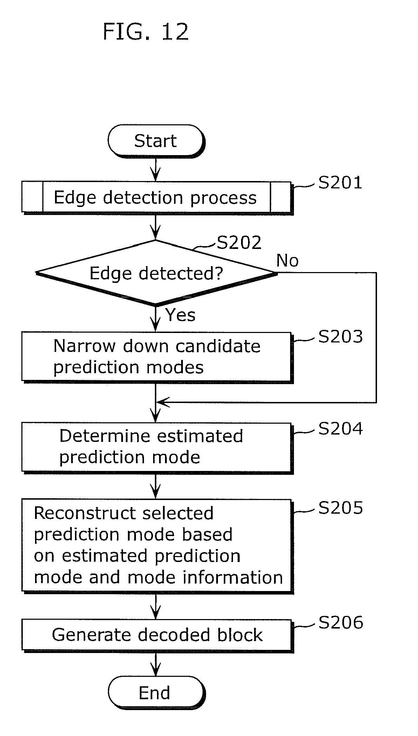

FIG. 12 is a flowchart indicating an example of the operations of the image decoding apparatus 300 according to Embodiment 1.

First, the edge vector determining unit 321 performs an edge detection process (S201). More specifically, the edge vector determining unit 321 detects an edge that is included in a decoded block previously generated and is located around the current block. The detailed operations of the edge detection process will be described later.

When the edge is detected in the edge detection process (Yes at S201), the candidate limiting unit 322 reduces the number of the candidate prediction modes based on the detected edge (S202). For example, the candidate limiting unit 322 reduces the number of candidate prediction modes, based on the angle (that is, direction) of the detected edge or the pixel position at which the edge has been detected.

Then, the prediction mode estimation unit 323 determines one of the candidate prediction modes reduced in number, as an estimated prediction mode (S204). When no edge is detected in the edge detection process (No at S203), the prediction mode estimation unit 323 determines an estimated prediction mode from among all the candidate prediction modes.

Next, the prediction mode reconstructing unit 324 reconstructs a selected prediction mode, based on the estimated prediction mode determined by the prediction mode estimation unit 323 and the mode information (S205). More specifically, when the mode information indicates a flag indicating that the estimated prediction mode matches the selected prediction mode, the prediction mode reconstructing unit 324 reconstructs the estimated prediction mode as the selected prediction mode.

Furthermore, when the mode information does not indicate a flag, the prediction mode reconstructing unit 324 determines the selected prediction mode, based on information included in the mode information and the estimated prediction mode. For example, when the mode information includes difference information between the estimated prediction mode and a prediction mode used in coding, the prediction mode reconstructing unit 324 reconstructs the selected prediction mode by adding the estimated prediction mode to the difference information.

Then, the decoding unit 310 decodes the current block according to the prediction using the reconstructured selected prediction mode to generate a decoded block (S206).

As described above, the image decoding apparatus 300 according to Embodiment 1 limits the number of candidate prediction modes according to a result of the edge detection and determines, as an estimate value of the current block, one of the candidate prediction modes limited in number, when determining the estimate value. Then, the image decoding apparatus 300 determines a prediction mode to be used for actual decoding, by adding the determined estimate to the difference mode information of the current block.

Hereinafter, the common operations between the image coding apparatus 100 and the image decoding apparatus 300 according to Embodiment 1 will be described. More specifically, the edge detection process (S103 and S201), the process of limiting the candidate prediction modes based on a result of the edge detection process (S105 and S203), and the process of estimating a prediction mode (S106 and S204) will be described.

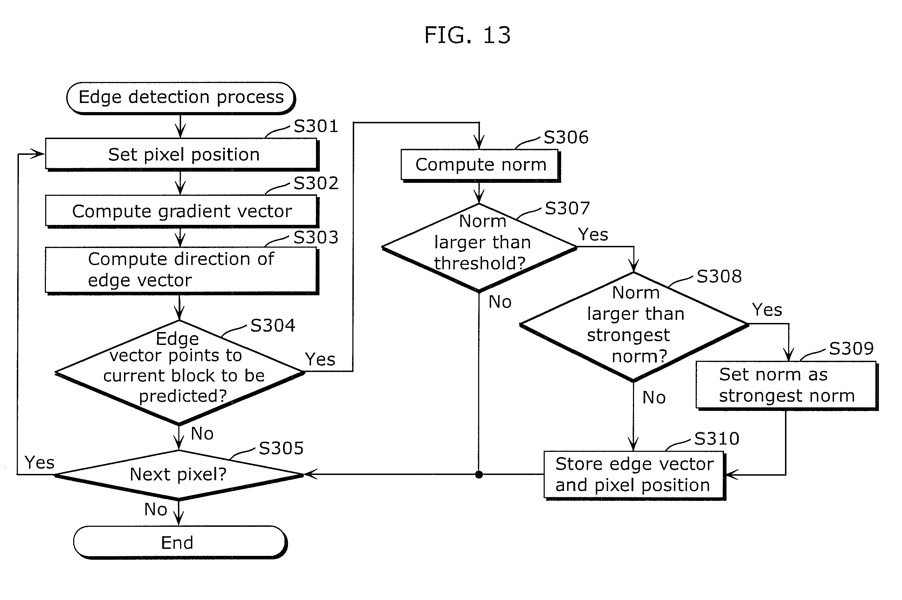

First, the edge detection process will be described with reference to FIG. 13. FIG. 13 is a flowchart indicating an example of the edge detection process according to Embodiment 1. Hereinafter, the edge detection process (S103) performed by the image coding apparatus 100 will be described.

The edge detection process is performed on all pixels (for example, the pixels left-diagonally hatched in FIG. 7A) considered for computing gradients. Thus, the edge detection unit 201 selects a pixel that is a target for which the gradient is computed, and sets the pixel position of the selected pixel (S301).

The edge detection unit 201 computes a gradient vector at the current pixel position, using the Sobel operators (S302). Then, the edge detection unit 201 computes an edge vector perpendicular to the computed gradient vector, and detects a direction of the computed edge vector (S303). The norm of an edge vector is equal to, for example, a norm of a gradient vector.

Next, the direction determining unit 202 determines whether or not the computed gradient indicates an edge that crosses the current block, that is, whether or not the edge vector perpendicular to the gradient vector points to the current block to be predicted (S304). Here, the fact that the edge vector points to the current block is equivalent to the fact that the extension of the edge vector crosses the current block.

When the edge vector does not point to the current block to be predicted (No at S304) and the next pixel is present (Yes at S305), the processing proceeds to the next pixel. In other words, the same processes are repeatedly performed, from the setting of the current pixel position (S301), on the next pixel as a new target pixel.

When the edge vector points to the current block to be predicted (Yes at S304), the norm determining unit 203 computes a norm of a gradient vector (S306). Then, the norm determining unit 203 determines whether or not the computed norm is larger than a predetermined threshold (S307).

When the computed norm is not larger than the predetermined threshold (No at S307) and the next pixel is present (Yes at S305), the processing proceeds to the next pixel. In other words, the same processes are repeatedly performed, from the setting of the current pixel position (S301), on the next pixel as a new target pixel.

When the computed norm is larger than the threshold (Yes at S307), the norm determining unit 203 determines whether or not the computed norm is larger than a norm of the gradient vector having the strongest norm from among all the gradient vectors previously determined (S308). When the computed norm is larger than the strongest norm (Yes at S308), the norm determining unit 203 sets the norm of the gradient vector as a new maximum vector (S309).

Then, regardless of a result of the comparison between the computed norm and the strongest norm, the norm determining unit 203 stores a vector and a position of the pixel in the edge vector storage memory 204 (S310). Here, the vector of the pixel to be stored in the memory is desirably an edge vector. Furthermore, the memory may be, for example, a memory included in the norm determining unit 203.

When the next pixel is present (Yes at S305), the processing proceeds to the next pixel. In other words, the same processes are repeatedly performed, from the setting of the current pixel position (S301), on the next pixel as a new target pixel.

As described above, the edge detection process is performed on the pixels included in surrounding blocks (the surrounding blocks 50) around the current block (current block 10) that are all the pixels (the pixels left-diagonally hatched in FIG. 7A) for which the edge detection process is to be performed, and the position at which an edge has been detected and the edge vector of the edge are stored in a memory.

The same holds true when the image decoding apparatus 300 performs the edge detection process. More specifically, the processing performed by the edge detection unit 201, the direction determining unit 202, the norm determining unit 203, and the edge vector storage memory 204 are respectively performed by the edge detection unit 401, the direction determining unit 402, and the norm determining unit 403, and the edge vector storage memory 404.

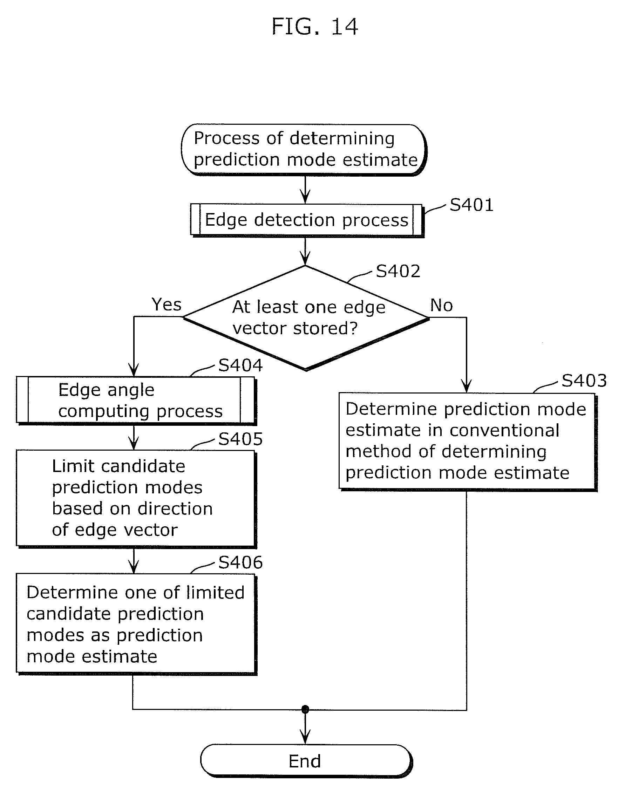

Next, the operations of the estimation unit 140 and the reconstructing unit 320 according to Embodiment 1 will be described with reference to FIG. 14. More specifically, the process of estimating a prediction mode performed by the estimation unit 140 and the reconstructing unit 320 will be hereinafter described.

FIG. 14 is a flowchart indicating an example of the prediction mode estimating process performed by the estimation unit 140 and the reconstructing unit 320 according to Embodiment 1. More specifically, FIG. 14 is a flowchart indicating the process for limiting the number of candidate prediction modes to reduce the computing amount and for determining a suitable prediction mode estimate. Hereinafter, the process performed by the estimation unit 140 included in the image coding apparatus 100 will be described.

First, the edge detection process in FIG. 13 is performed by the edge detection unit 201, the direction determining unit 202, the norm determining unit 203, and the edge vector storage memory 204 (S401). Next, the prediction mode estimation unit 143 determines whether or not at least one edge vector is stored, that is, whether or not there is a vector with a norm larger than a threshold, along a direction of an edge that points to the current block (S402).

Here, Steps S401 and S402 correspond to Steps S103 and S104 in FIG. 8, respectively.

When no edge vector is stored, that is, no edge is detected (No in S402), the prediction mode estimation unit 143 determines a prediction mode estimate in the conventional method of determining the prediction mode estimate (S403). Here, the conventional method of determining a prediction mode estimate is a method of determining one of prediction modes of the surrounding blocks as the prediction mode estimate using a predetermined method.

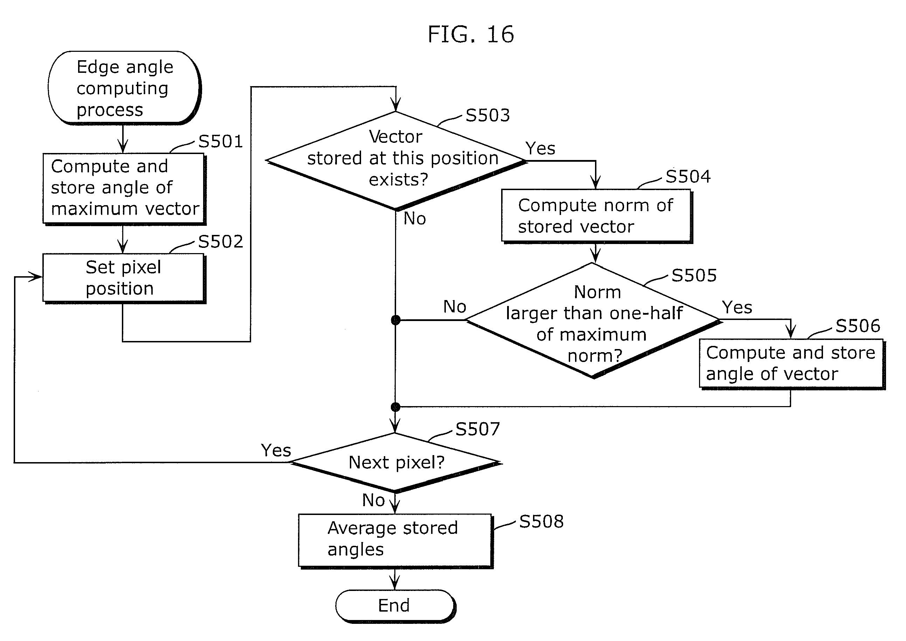

When at least one edge vector is stored, that is, an edge is detected (Yes in S402), the edge vector determining unit 141 computes the angle of the edge by performing an edge angle computing process (S404). The detailed operations of the edge angle computing process will be described later with reference to FIG. 16.

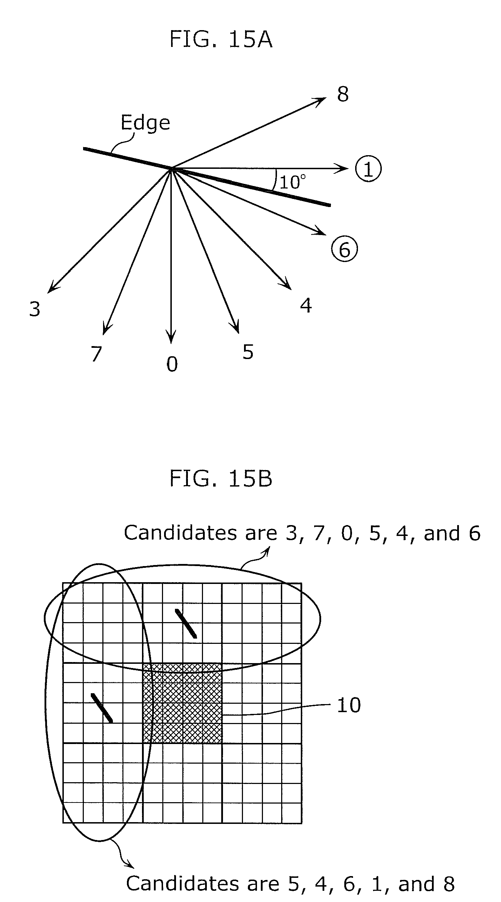

The candidate prediction mode limiting unit 212 compares the computed angle of the edge with angles of predetermined directional prediction modes, selects two of the directional prediction modes that are the closest to the computed angle, and outputs information indicating the selected two directional prediction modes as the limited information to the candidate prediction mode obtaining unit 213 (S405). Here, the two directional prediction modes that are the closest to the computed angle indicate, for example, a case where the computed angle of the edge vector is inclined 10 degrees to the lower right with respect to the horizontal direction as illustrated in FIG. 15A. When the candidate prediction mode limiting unit 212 compares the computed angle of the edge with angles of the directional prediction modes in accordance with the H.264 standard, 1 and 6 that are the prediction mode numbers in FIG. 1B are output as the two directional prediction modes.

As such, the candidate prediction mode limiting unit 212 limits the eight directional prediction modes to the two directional prediction modes to reduce the number of candidate prediction modes. Here, the candidate prediction mode limiting unit 212 has only to limit the directional prediction modes, not limited to the two directional prediction modes but less than eight prediction modes. In other words, the candidate prediction mode limiting unit 212 has only to reduce the number of candidate prediction modes by excluding, from the candidates, the directional prediction mode indicating a direction the most distant from the direction of the detected edge.

Furthermore, the candidate prediction mode limiting unit 212 may limit the candidate prediction modes based on the position of the block at which the edge has been detected. More specifically, among the prediction modes in FIG. 1B, the prediction mode number 8 indicates the prediction from the surrounding blocks to the left of the current block, and the prediction mode number 3 indicates the prediction from the surrounding blocks to the upper of the current block. For example, as illustrated in FIG. 15B, when the edge vectors detected in the edge detection process include the large number of edge vectors belonging to the surrounding blocks to the upper of the current block, the candidate prediction mode limiting unit 212 may limit the candidate prediction modes to the prediction mode numbers 3, 7, 0, 5, 4, and 6 that indicate the prediction from the surrounding blocks to the upper of the current block. Furthermore, when the edge vectors include the large number of edge vectors belonging to the surrounding blocks to the left of the current block, the candidate prediction mode limiting unit 212 may limit the candidate prediction modes to the prediction mode numbers 5, 4, 6, 1, and 8 that indicate the prediction from the surrounding blocks to the left of the current block.

The prediction mode estimation unit 143 determines, as a prediction mode estimate, one of the limited prediction modes in the candidate prediction mode obtaining unit 213, that is, one of the two directional prediction modes closer to the angle of the edge vector and the candidate prediction mode other than the predetermined directional prediction modes (for example, the edge prediction mode) (S406).

The processes in which the image coding apparatus 100 determines the prediction mode estimate will be hereinafter described. The same processes will be performed by the image decoding apparatus 300. The processes performed by the edge vector determining unit 141, the candidate prediction mode limiting unit 212, the prediction mode storage memory 211, the candidate prediction mode obtaining unit 213, and the prediction mode estimation unit 143 are performed by the edge vector determining unit 321, the candidate prediction mode limiting unit 412, the prediction mode storage memory 411, the candidate prediction mode obtaining unit 413, and the prediction mode estimation unit 323.

Here, an example of a method of determining one of candidate prediction modes as a prediction mode estimate will be described. For example, it is assumed that the candidate prediction modes are all the prediction modes, and the determination area is surrounding blocks to the upper and the left of the current block. The prediction mode estimation unit 143 generates predicted blocks of the blocks in the determination area that are obtainable in all the prediction modes, further using the surrounding blocks, and computes differences between the generated predicted blocks and the decoded block that corresponds to the predicted block and has been already coded and decoded. Then, the prediction mode estimation unit 143 determines the prediction mode in which the predicted block having the computed smallest difference is generated, as the prediction mode estimate.

Since the method is for predicting a result of the current block from results of the surrounding blocks, using the spatial continuity in the image, the computing amount is very large. Here, the candidate prediction mode limiting unit 212 in FIG. 14 limits the number of candidate prediction modes, so that the computing amount can be reduced and the prediction mode estimate of the current block can be determined using only the area where the spatial continuity in the image is stronger, thus it is expected that the accuracy of the prediction will be improved.

Next, the process of computing the angle of the detected edge based on the result of the edge detection will be described. The outline of the edge angle computing process are as follows.

Since a gradient is computed for each target pixel included in the surrounding blocks, the edge vector determining unit 141 computes the angle of the edge using a vector having the strongest norm, and a vector of a pixel adjacent to the pixel in which the vector with the strongest norm has been detected. More specifically, the edge vector determining unit 141 compares a norm of the maximum vector with a norm of an edge vector (or gradient vector) corresponding to each of the adjacent pixels.

When the norm of the edge vector of each of the adjacent pixels is larger than one-half of the norm of the maximum vector, the edge vector of the adjacent pixel is stored in the edge vector storage memory 204 to be used. Then, the edge vector determining unit 141 computes an average of angles of the maximum vector and the surrounding vectors that are stored in the memory, as an angle $\alpha$ of the edge direction. More specifically, the processing is performed according to the flowchart in FIG. 16 as follows.

FIG. 16 is a flowchart indicating an example of the edge angle computing process according to Embodiment 1. The edge angle computing process depends on a result of the edge detection process described with reference to FIG. 13. As a result of the edge detection process in FIG. 13, at least one edge vector determined larger than a threshold and a position of the pixel corresponding to the edge vector are stored in the edge vector storage memory 204.

The norm determining unit 203 computes an angle of the maximum edge vector detected in the edge detection process, and stores the angle in the edge vector storage memory 204 (S501). Then, the following processes are performed on all the pixels adjacent to the pixel from which the maximum edge vector has been computed (S502). In other words, the norm determining unit 203 performs the following process by setting, to the current pixel position, a position of one of the pixels adjacent to the pixel from which the maximum edge vector has been detected.

Next, the norm determining unit 203 determines whether or not an edge vector corresponding to the current pixel position is stored in the edge vector storage memory 204 (S503). In other words, the norm determining unit 203 determines whether or not an edge vector having a norm larger than a threshold and pointing to the current block is stored in the edge vector storage memory 204.

When the edge vector is stored (Yes at S503), the norm determining unit 203 computes the norm of the edge vector (S504). Then, the norm determining unit 203 compares the computed norm with the norm of the maximum edge vector (S505). When the computed norm is larger than one-half of the maximum norm (Yes at S505), the norm determining unit 203 computes the angle of the edge vector at the current pixel position and stores the computed angle in the edge vector storage memory 204 (S506).

The processes (S503 to S506) are performed on all the target pixel positions. When there is no next pixel, that is, the processes on all of the target pixel positions end (No in S507), the norm determining unit 203 computes the angle of the edge by averaging the angles stored in the edge vector storage memory 204 (S508).

The processes of determining an angle of the detected edge as in FIG. 16 are mere exemplifications. The present invention is not limited by any particular methods of detecting an edge or determining a direction of the edge. For example, the angle of an edge may be determined only using a direction of the maximum edge vector. Alternatively, it may be determined using a vector closer to a larger or smaller number or using directions of other vectors along the edge. Furthermore, although a vector stored in a memory is assumed to be an edge vector, it may be a gradient vector.

Here, an example of the conventional method of determining a prediction mode estimate without based on an edge vector will be described. Conventionally, the smallest number of the prediction modes of the surrounding blocks is determined as the prediction mode estimate for the intra-prediction mode for intra coding. In contrast according to the present invention, a surrounding block indicating the position information on the same reference frame from among a plurality of position information of the surrounding blocks is retrieved, a median value of the values of the plurality of position information of the surrounding blocks is computed, and the computed median value is determined as a prediction mode estimate of position information for inter coding. The present invention is not limited to such a method of determining a prediction mode estimate without based on an edge vector.

Hereinafter, details of the prediction mode estimate will be described. For example, when the Lagrangian cost function J expressed by Equation 1 is used for coding at a low bit rate, as the quantization parameter QP is increased, the Lagrange multiplier is increased. Thus, "R" in Equation 1, that is, the bit rate to be used for coding is relatively important for the Lagrangian cost function J. In other words, the bit rate R (code amount) is more focused than the coding artifacts D.

Thus, when the intra coding in consideration of the cost function in Equation 1 is performed, a coding mode is selected so that the intra-prediction mode to be used in the actual intra coding indicates a value identical to the intra-prediction mode estimate. This is because, when the intra-prediction mode estimate is the same as the intra-prediction mode, only a flag indicating that the intra-prediction mode estimate is the same as the intra-prediction mode remains in the bitstream, and thus the code amount to be generated is small. Thus, when coding at a low bit rate, it is important to reduce the coding artifacts D in the intra-prediction mode identical to the intra-prediction mode estimate.

Thus, the number of prediction modes that are candidates for determining the prediction mode estimate is reduced using the edge information according to Embodiment 1. Thereby, it is possible to increase the probability that the prediction mode estimate is equivalent to the prediction mode actually used for the prediction, and to reduce the code amount. Furthermore, reducing the number of candidate prediction modes can lead to reduction in the computing amount.

Furthermore, correlations between the current block and the surrounding blocks are determined using the edge information, and the prediction mode of the surrounding block having the higher correlation is used, so that the coding artifacts D can be reduced using the intra-prediction mode identical to the intra-prediction mode estimate, and coding artifacts can be suppressed also at the lower bit rate.

On the other hand, similarly in the inter coding, the motion estimation is performed so that the position information used in the actual inter coding is identical to the estimate for the position information. Similarly in this case, correlations between the current block and the surrounding blocks are determined using the edge information, and the prediction mode of the surrounding block having the higher correlation is used or a weight is added to the prediction mode, so that the coding artifacts D can be reduced using position information identical or closer to the estimate for the position information, and coding artifacts can be suppressed also at the lower bit rate.

Although the image coding apparatus, the image decoding apparatus, and the corresponding methods according to the present invention are described based on Embodiment 1, the present invention is not limited to Embodiment 1. Without departing from the scope of the present invention, the present invention includes, on Embodiment 1, an embodiment conceived by a person skilled in the art and having some modifications.

According to Embodiment 1 of the present invention, gradients are computed using Sobel operators to detect an edge, for example. The present invention, however, is not limited in this respect. Instead, any edge detection tool may be employed provided that the directionality of the detected edge is computed. The Sobel operators are only one example of a possible edge detection technique. For example, Prewitt operators as indicated in Equation 3 may be used.

[Math. 3]

$$Prewitt_x = \begin{bmatrix} -1 & 0 & 1 \\ -1 & 0 & 1 \\ -1 & 0 & 1 \end{bmatrix}, \quad Prewitt_y = \begin{bmatrix} -1 & -1 & -1 \\ 0 & 0 & 0 \\ 1 & 1 & 1 \end{bmatrix} \qquad \text{(Equation 3)}$$

Furthermore, gradients on blocks that have been low-pass filtered may be computed. More specifically, gradients may be computed using filter coefficients included in a low pass filter (LPF) and operators obtained by convolving Sobel operators or Prewitt operators.

Thus, according to Embodiment 1, the edge detection unit 201 or 401 may compute gradients, for example, by selecting and using one of (i) only Sobel operators, (ii) only Prewitt operators, (iii) a synthetic filter synthesized from Sobel operators and an LPF, and (IV) a synthetic filter synthesized from Prewitt operators and an LPF. A filter is selected, for example, based on an instruction from the user outside or characteristics of the current block. When the current picture includes a large amount of noise, that is, the current picture is not flat, for example, a filter including an LPF is used.

Furthermore, although the norm determining unit 203 of the image coding apparatus 100 or the norm determining unit 403 of the image decoding apparatus 300 according to Embodiment 1 determines a norm using a predetermined threshold, the threshold may be changed per sequence, picture, slice, or block. In this case, the determined threshold needs to be included in a bitstream and transmitted to the decoder. For example, information indicating a threshold may be included in a sequence parameter set (SPS), a picture parameter set (PPS), or a slice header (SH) on a per unit basis for determining a threshold.

Furthermore, as described above, the candidate prediction modes may include the edge prediction mode described in NPL 2. The edge prediction mode is one of intra-prediction modes for the intra prediction in which the pixel value of the surrounding block is interpolated or extrapolated in the direction of the detected edge. In the edge prediction mode, a suitable estimate can also be determined. The method of determining a prediction mode estimate here is applied to the intra-coding mode. When no edge is detected in the edge detection process, the prediction mode estimation unit 143 determines a prediction mode estimate in the conventional method of determining the prediction mode estimate.

Although the number of candidate prediction modes is reduced based on the direction (angle) of the edge or the position of the block in which the edge has been detected according to Embodiment 1, when two or more edges are detected, the number of candidate prediction modes may be reduced based on a variation between the two or more edges. The variation is, for example, a variance of edge vectors.

For example, when an edge is detected and two or more edge vectors are stored, the candidate prediction mode limiting unit 212 computes a variance of the stored edge vectors. When the variance is smaller than a predetermined threshold, it is assumed that a sharp edge exists in the direction of the edge. For example, the candidate prediction modes are limited to candidate prediction modes including the edge prediction mode by, for example, excluding the eight directional prediction modes.

On the other hand, when the variance is larger than the threshold, the edge angle computing process in FIG. 16 is performed to limit the number of candidate prediction modes including two of the predetermined directional prediction schemes for the angle that is the closest to the computed edge angle (the eight directional prediction modes in FIG. 1B in the case of the H.264 standard). Furthermore, when a single edge is detected, the candidate prediction modes are limited to those including the edge prediction mode because of the presence of the sharp edge.

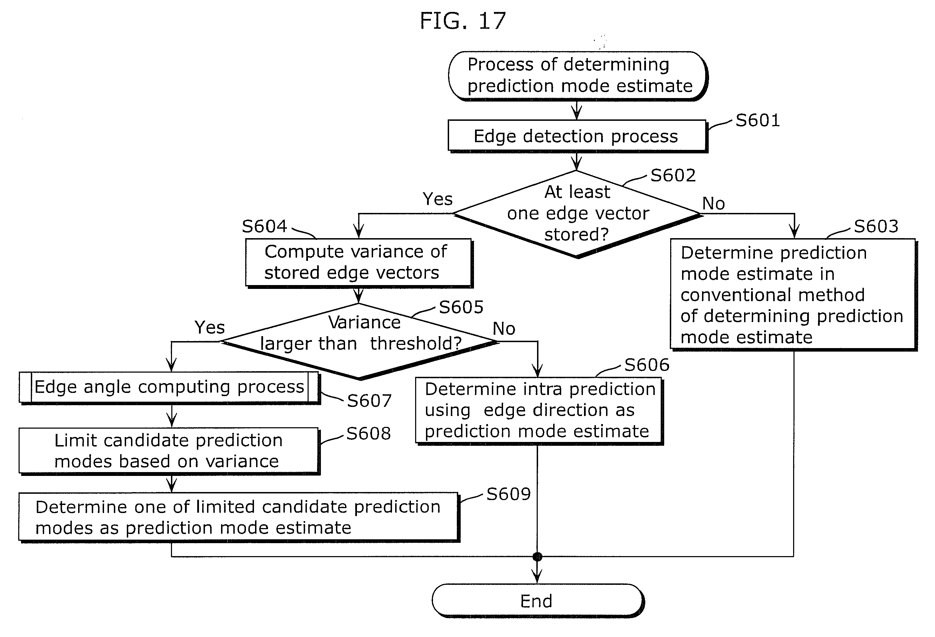

More specifically, the processing is performed according to the flowchart in FIG. 17 as follows.

First, the edge detection process in FIG. 13 is performed by the edge detection unit 201, the direction determining unit 202, the norm determining unit 203, and the edge vector storage memory 204 (S601). Next, the prediction mode estimation unit 143 determines whether or not at least one edge vector is stored, that is, whether or not there is a vector with a norm larger than a threshold, along a direction of an edge that points to the current block (S602).

When no edge vector is stored, that is, no edge is detected (No in S602), the prediction mode estimation unit 143 determines a prediction mode estimate in the conventional method of determining the prediction mode estimate (S603).

When at least one edge vector is stored, that is, an edge is detected (Yes in S602), the prediction mode estimation unit 143 computes a variance of the stored edge vectors that is an example of the variation between edges (S604). Then, the vector is resolved into an X component and a Y component, and a sum of the variances according to each size of the X component and the Y component is computed.

When the computed variance is smaller than a predetermined threshold (No in S605), the intra-prediction mode using an edge direction is determined as the prediction mode estimate (S606). When only one edge vector is stored, the variance is 0. Thus, the intra-prediction mode in the edge direction is always determined as the prediction mode estimate.

On the other hand, when the computed variance is larger than the predetermined threshold (Yes in S605), the edge vector determining unit 141 computes an angle of the edge by performing the edge angle computing process in FIG. 16 (S607). Then, the candidate prediction mode limiting unit 212 limits the candidate prediction modes based on the variance and the angle of the edge (S608). For example, the candidate prediction mode limiting unit 212 limits the candidate prediction modes to the DC prediction mode and the two directional prediction modes. The two directional prediction modes are two directional prediction modes closer to the computed angle of the edge.

Then, the prediction mode estimation unit 143 determines one of the limited candidate prediction modes as a prediction mode estimate (S609).

The larger variance indicates that the surrounding blocks include edges in various directions and having various sizes. Thus, the candidate prediction modes include, not the directional prediction modes and the edge prediction mode in each of which an unique direction is used, but the DC prediction mode in which an average of pixel values is used.

The processes in which the image coding apparatus 100 determines the prediction mode estimate are hereinbefore described. The same processes will be performed by the image decoding apparatus 300. The processes performed by the edge vector determining unit 141, the candidate prediction mode limiting unit 212, the prediction mode storage memory 211, the candidate prediction mode obtaining unit 213, and the prediction mode estimation unit 143 are performed by the edge vector determining unit 321, the candidate prediction mode limiting unit 412, the prediction mode storage memory 411, the candidate prediction mode obtaining unit 413, and the prediction mode estimation unit 323.

The process of computing the variance (S604) that is the example of the variation between edges may be performed in another method. For example, angles of edges are computed for all the stored vectors, each of the computed angles is compared with an average of the angles of the edges of all the vectors, and the largest difference between one of the vectors and the average, that is, a difference in angle is compared with a threshold (S605).

Compared to the method in FIG. 17, when one vector is largely different from the average, the edge prediction mode that is an intra-prediction mode using an edge direction is not selected as a prediction mode estimate in the other method. This is because when one vector is considerably directed to another angle, the coding efficiency will not be improved in the intra prediction that is more effective for the sharp edge using the edge direction. Thereby, when one vector is considerably directed to another angle, the prediction mode estimate can be determined in a more suitable manner.

With this method, since the directional prediction mode can be predicted using a direction of an edge, it is expected that the accuracy for estimating the prediction mode estimate will be improved.

Furthermore, when the coding scheme does not include the intra-prediction mode using a direction of an edge, an angle of the edge may be computed and one of the predetermined directional prediction schemes may be determined as the prediction mode estimate, regardless of the variance. Furthermore, when no edge is detected, it is assumed that the current block is flat. In such a case, the DC prediction mode using an average of the surrounding blocks as a predicted block may be determined as the prediction mode estimate without using the conventional method of determining the prediction mode estimate. In this manner, it is expected that the computing amount can be reduced and the coding artifacts can be reduced, because the characteristics of the surrounding blocks are used for determining the prediction mode estimate.

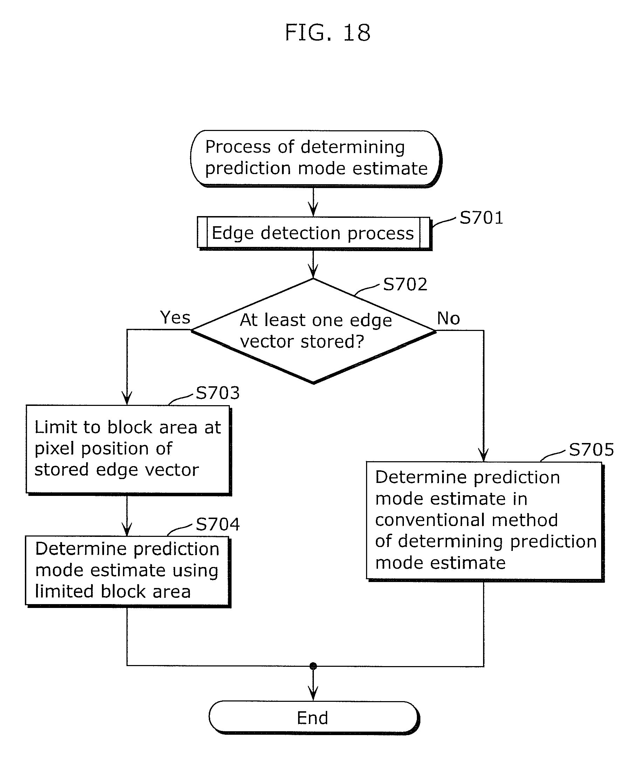

Furthermore, the number of candidate prediction modes can be reduced by limiting a processing area for determining the prediction mode estimate. FIG. 18 is a flowchart indicating an example of the prediction-mode estimating process performed by the estimation unit 140 and the reconstructing unit 320 according to Embodiment 1. More specifically, FIG. 18 is a flowchart indicating the processes for limiting the processing area to be used for determining one of the candidate prediction modes as a prediction mode estimate to reduce the computing amount and for determining a suitable prediction mode estimate. Hereinafter, the processes performed by the estimation unit 140 included in the image coding apparatus 100 will be described.

First, the edge detection process in FIG. 13 is performed by the edge detection unit 201, the direction determining unit 202, the norm determining unit 203, and the edge vector storage memory 204 (S701). Next, the prediction mode estimation unit 143 determines whether or not at least one edge vector is stored, that is, whether or not there is a vector with a norm larger than a threshold, along a direction of an edge that points to the current block (S702).

Here, Steps S701 and S702 correspond to Steps S103 and S104 in FIG. 8, respectively.

When at least one edge vector is stored, that is, an edge is detected (Yes in S702), the candidate prediction mode limiting unit 212 outputs the pixel position of the block to which the stored edge vector belongs as the limited information to the candidate prediction mode obtaining unit 213 (S703). The prediction mode estimation unit 143 determines a prediction mode estimate obtained from the candidate prediction mode obtaining unit 213 using a limited area, that is, a block area to which the edge vector belongs (S704).

When no edge vector is stored, that is, no edge is detected (No in S702), the prediction mode estimation unit 143 determines a prediction mode estimate in the conventional method of determining the prediction mode estimate (S705).

As described above, not the number of candidate prediction modes itself but the determination area may be limited. In other words, since the candidate prediction modes are present for each determination area, the number of candidate prediction modes can be reduced by limiting the determination area.

The processes in which the image coding apparatus 100 determines the prediction mode estimate is hereinbefore described. The same processes will be performed by the image decoding apparatus 300. The processes performed by the edge vector determining unit 141, the candidate prediction mode limiting unit 212, the prediction mode storage memory 211, the candidate prediction mode obtaining unit 213, and the prediction mode estimation unit 143 are performed by the edge vector determining unit 321, the candidate prediction mode limiting unit 412, the prediction mode storage memory 411, the candidate prediction mode obtaining unit 413, and the prediction mode estimation unit 323.

Here, an example of a method of determining one of candidate prediction modes as a prediction mode estimate will be described. For example, it is assumed that the candidate prediction modes are all the prediction modes, and the determination area is surrounding blocks to the upper and the left of the current block.

The prediction mode estimation unit 143 generates predicted blocks of the blocks in the determination area that are obtainable in all the prediction modes, further using the surrounding blocks, and computes differences between the generated predicted blocks and the decoded block that corresponds to the predicted block and has been already coded and decoded. The prediction mode estimation unit 143 determines the prediction mode in which the predicted block having the computed smallest difference is generated, as the prediction mode estimate.

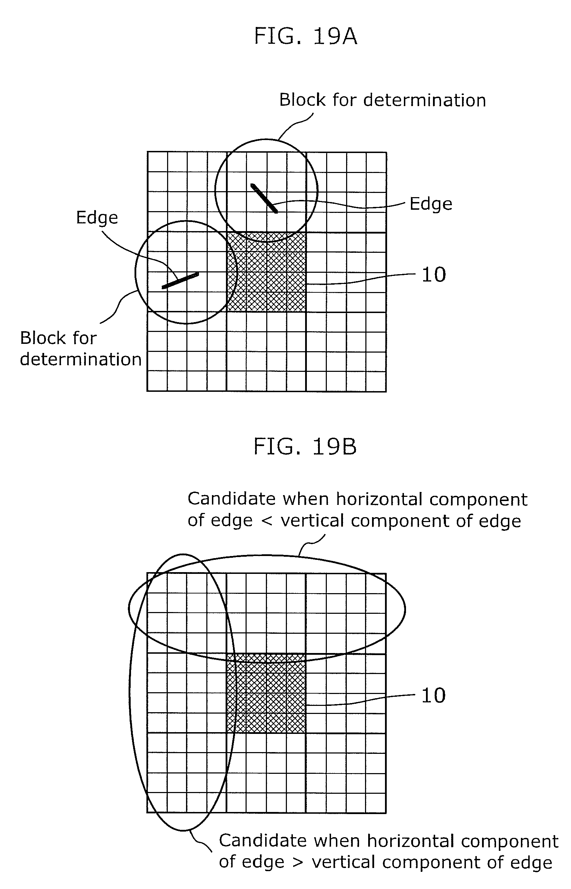

Since the method is for predicting a result of the current block from results of the surrounding blocks using the spatial continuity in the image, the computing amount is very large. Here, the candidate prediction mode limiting unit 212 in FIG. 6 limits the pixel area to which the edge vector belongs to the determination area as illustrated in FIG. 19A. Thereby, the computing amount can be reduced. In other words, the candidate prediction mode limiting unit 212 can reduce the number of candidate prediction modes by excluding, from computation targets, a surrounding block in which no edge is detected.

Furthermore, the prediction mode estimate of the current block can be determined using the continuity in the edge and only the area where the spatial continuity in the image is stronger, and thus it is expected that the accuracy of the prediction will be improved.

In addition, the candidate prediction mode limiting unit 212 can reduce the number of candidate prediction modes by limiting the computation targets to a surrounding block in which the maximum edge with the strongest norm is detected. The maximum edge is determined according to the flowchart in FIG. 13.

Furthermore, the determination area to be computed can be limited based on the direction of the detected edge vector. For example, when the horizontal component of the detected edge vector is larger than the vertical component thereof, only the surrounding blocks to the left of the current block 10 (that is, surrounding blocks to the left and upper left) may be determined as the determination area as illustrated in FIG. 19B. Furthermore, when the vertical component of the detected edge vector is larger than the horizontal component thereof, only the surrounding blocks to the upper of the current block 10 (that is, surrounding blocks to the upper left, the upper, and the upper right) may be determined as the determination area.

Except that the area to be used for computation is limited using a result of the edge detection, the method of determining one of the candidate prediction modes as the prediction mode estimate is not limited in the present invention.

As described above, each of the image coding apparatus 100 and the image decoding apparatus 300 according to Embodiment 1 determines a prediction mode estimate depending on whether or not an edge has been detected. In other words, when an edge is detected, a prediction mode estimate is determined in a method of determining the prediction mode estimate based on an edge vector. When no edge is detected, a prediction mode estimate is determined not in a conventional method based on an edge vector but in a method of determining one of candidate prediction modes as a prediction mode estimate.

The process of limiting a determination area for determining a prediction mode estimate (process in the flowchart of FIG. 18) can be combined with the process of limiting the number of candidate prediction modes (process in the flowchart of FIG. 14), in the method of determining one of candidate prediction modes as a prediction mode estimate. With such a combination, it is expected that the computing amount can be further reduced.

Except that the area to be used for computation is limited using a result of the edge detection, the method of determining one of candidate prediction modes as a prediction mode estimate is not limited in the present invention.

The image coding apparatus and the image decoding apparatus according to Embodiment 1 can detect an edge included in surrounding blocks around the current block, evaluate a relationship between the current block and the surrounding blocks with the direction of the detected edge, and use the relationship for estimating the prediction mode, when coding and decoding an image and video data. In other words, the prediction mode can be estimated in consideration of a direction of an edge when the prediction mode information is coded according to Embodiment 1.

Although the estimation unit 140 and the reconstructing unit 320 always receive edge detection flags through the edge vector determining units 141 and 321, respectively, they may receive edge detection flags from outside. The edge detection flag is a flag for switching between validity and invalidity of the edge detection process. For example, the validity and invalidity of the edge detection process can be switched per sequence, picture, or slice.

Furthermore, since the present invention can invalidate the edge detection process on a flat image that cannot sufficiently enjoy the advantage of the present invention, the processing load of the image coding apparatus 100 can be reduced, and coding process can be sped up.

Furthermore, since the edge detection flag is transmitted to a decoder, it is possible to prevent a decoder from performing the edge detection process on a bitstream in which the edge detection has not yet been performed.

Here, the bitstream may include a threshold used by the edge vector determining unit 141. The information indicating the threshold is included, for example, in an SPS, a PPS, and an SH.

The threshold is determined by, for example, computing a feature index of an image. The feature index of an image is, for example, a variance and intensity of an image in which the edge detection process is performed. For example, as a variance is larger, a larger value is assigned to a threshold for use in determining a norm. Since a larger variance indicates that the image includes a large amount of noise, it is highly likely that an edge is wrongly detected. Thus, use of a larger threshold in determining a norm can reduce a possibility that an edge is wrongly detected.

Furthermore, the threshold may be determined based on a result of the edge detection process on a previous picture. For example, as the larger number of edges different in direction from the edge in the previous picture is detected, a larger value is assigned to the threshold. The detection of the larger number of edges in the different directions indicates that there is a possibility that an edge is not accurately detected due to the influence of noise. Thus, assigning a larger value to a threshold for use in determining a norm can reduce the possibility that an edge is wrongly detected.

Thereby, a threshold can be adaptively changed, thus, the more appropriate threshold can be determined, and the more appropriate predicted block can be generated. Thus, coding artifacts and others can be reduced.

The image coding apparatus 100 and the image decoding apparatus 300 of Embodiment 1 needs to respectively store, in the reference picture memory 160 and the frame memory 314, not only the reference pixels 20 in FIG. 1A but also data of all pixels included in the blocks including the reference pixels 20 in order to perform the edge detection process. Furthermore, the image coding apparatus 100 and the image decoding apparatus 300 may compute gradients at the same time when decoding surrounding blocks, i.e., obtaining pixel values of reference pixels necessary for computing the gradients, and store only the result of the computation in the reference picture memory 160 and the frame memory 314, or other memories.

Here, memory resources can be further saved by storing only a norm (or gradient value) beyond a threshold, for example. Alternatively, only the strongest norm in each block and its pixel position may be stored. In this case, the computed norm (or gradient value) is stored in the reference picture memory 160 and the frame memory 314, or in the edge vector storage memories 204 and 404.

Thereby, the memory resources of the image coding apparatus 100 and the image decoding apparatus 300 can be effectively used.

Furthermore, the method of computing predicted values may be replaced with any method duly in consideration of a direction of a detected edge, within the scope of the present invention. More specifically, reference pixels larger than the described reference pixels in number or other reference pixels may be used as a replacement for reference pixels adjacent to the current block to be predicted.

Furthermore, the present invention is limited neither by the H.264 video coding standard nor by the conventional prediction value of the intra-prediction mode and a prediction value of position information (motion vector), such as the intra-prediction mode using the direction of an edge (edge prediction mode) described in NPL 2. In fact, the inventive method of estimating a prediction mode can also be used by any block-based video coder.

Furthermore, the edge detection unit that performs the method of estimating a prediction mode according to the present invention may share a part of the functions with the video coding scheme. For example, the edge detection unit can be commonly used by applying the present invention to the video coding scheme including the edge prediction mode, and thus, the resources can be effectively used.

Furthermore, the present invention is not limited to video coding applications but may also be used for block-based still image coding.

Furthermore, the present invention can be implemented not only as an image coding apparatus, an image decoding apparatus, and a method thereof but also as a program causing a computer to execute the image coding method and the image decoding method according to Embodiment 1. Furthermore, the present invention can be implemented as a recording medium that records the program, such as a computer-readable CD-ROM. Furthermore, the present invention can be implemented as information, data, or a signal each indicating the program. Furthermore, these program, information, data, and signal may be distributed through a communication network, such as the Internet.

A part or all of the constituent elements included in the respective image coding apparatus and image decoding apparatus may be configured from a single System-Large-Scale Integration (LSI). The System-LSI is a super-multi-function LSI manufactured by integrating constituent units on one chip, and is specifically a computer system configured by including a microprocessor, a ROM, and a RAM.

In summary, the present invention relates to coding and decoding an image and video data, and in particular to a method of estimating a prediction value for predicting information necessary for prediction using information of the blocks previously coded and decoded. According to this method, the prediction value can be more reliably estimated by taking the correlation between blocks using the continuity of the edge into account, when a sharp edge points to the current block.

(Embodiment 2)

The processing described in Embodiment 1 can be simply implemented by recording, in a recording medium, a program for implementing the configuration for the image coding method or the image decoding method described in Embodiment 1. The recording medium may be any recording medium as long as the program can be recorded thereon, such as a magnetic disk, an optical disc, a magnetic optical disc, an IC card, and a semiconductor memory.

Hereinafter, the applications to the image coding method and the image decoding method described in Embodiment 1 and a system using the same will be described.

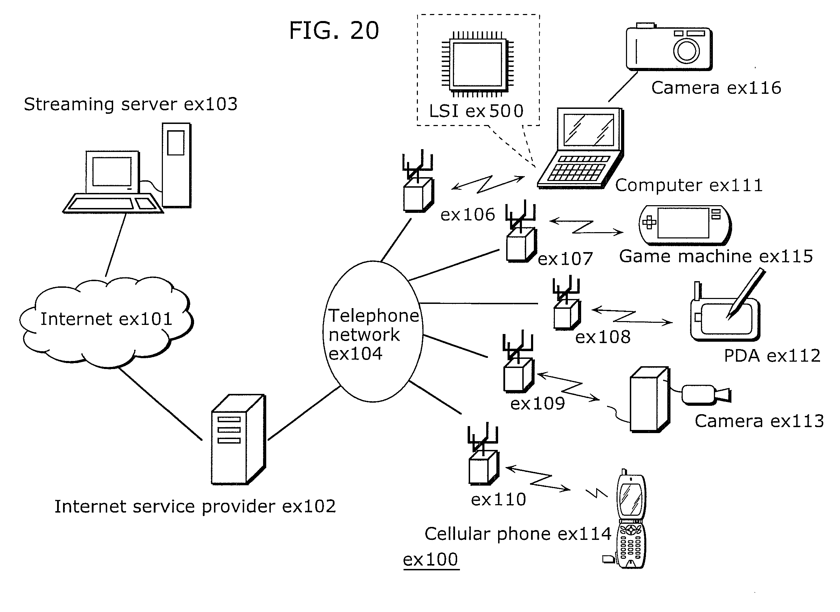

FIG. 20 illustrates an overall configuration of a content providing system ex100 for implementing content distribution services. The area for providing communication services is divided into cells of desired size, and base stations ex106 to ex110 which are fixed wireless stations are placed in each of the cells.

The content providing system ex100 is connected to devices, such as a computer ex111, a personal digital assistant (PDA) ex112, a camera ex113, a cellular phone ex114 and a game machine ex115, via an Internet ex101, an Internet service provider ex102, a telephone network ex104, as well as the base stations ex106 to ex110.

However, the configuration of the content providing system ex100 is not limited to the configuration shown in FIG. 20, and a combination in which any of the elements are connected is acceptable. In addition, each of the devices may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing moving images. A camera ex116, such as a digital video camera, is capable of capturing both still images and moving images. Furthermore, the cellular phone ex114 may be the one that meets any of the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of a live show and others. For such a distribution, a content (for example, video of a music live show) captured by the user using the camera ex113 is coded as described above in Embodiment 1, and the coded content is transmitted to the streaming server ex103. On the other hand, the streaming server ex103 carries out stream distribution of the received content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and moving images captured by not only the camera ex113 but also the camera ex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding images may be integrated into some type of a recording medium (such as a CD-ROM, a flexible disk, a hard disk) that is readable by the computer ex111 and others, and the coding and decoding processes may be performed using the software. Furthermore, when the cellular phone ex114 is equipped with a camera, the moving picture data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients can receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

When each of the devices included in the content providing system ex100 performs coding and decoding, the image coding method and the image decoding method shown in Embodiment 1 may be used.

The cellular phone ex114 will be described as an example of such a device.

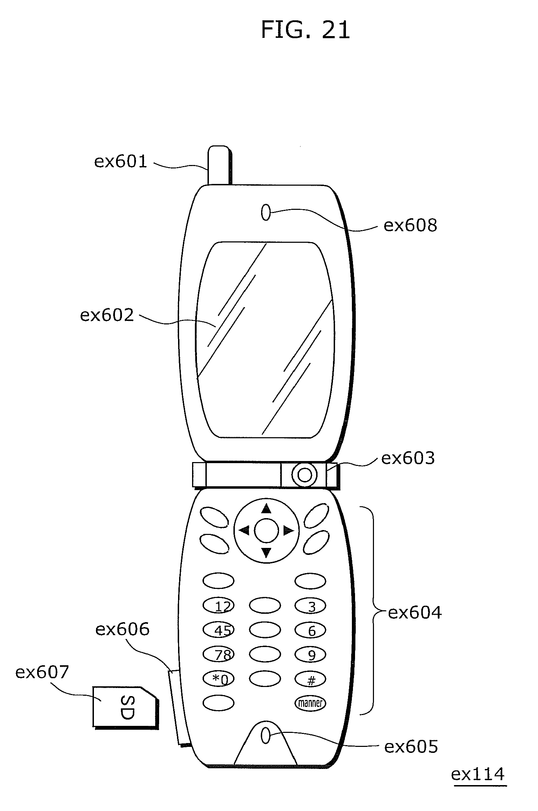

FIG. 21 illustrates the cellular phone ex114 that uses the image coding method and the image decoding method described in Embodiment 1. The cellular phone ex114 includes: an antenna ex601 for transmitting and receiving radio waves through the base station ex110; a camera unit ex603 such as a CCD camera capable of capturing moving and still images; a display unit ex602 such as a liquid crystal display for displaying the data such as decoded video captured by the camera unit ex603 or received by the antenna ex601; a main body unit including a set of operation keys ex604; an audio output unit ex608 such as a speaker for output of audio; an audio input unit ex605 such as a microphone for input of audio; a recording medium ex607 for recording coded or decoded data including data of captured moving or still images, data of received e-mails, and data of moving or still images; and a slot unit ex606 for enabling the cellular phone ex114 to attach the recording medium ex607. The recording medium ex607 is a medium that stores a flash memory device within a plastic case, for example, an SD Card. The flash memory device is one type of Electrically Erasable and Programmable Read-Only Memory (EEPROM) which is a non-volatile memory that is electrically rewritable and erasable.

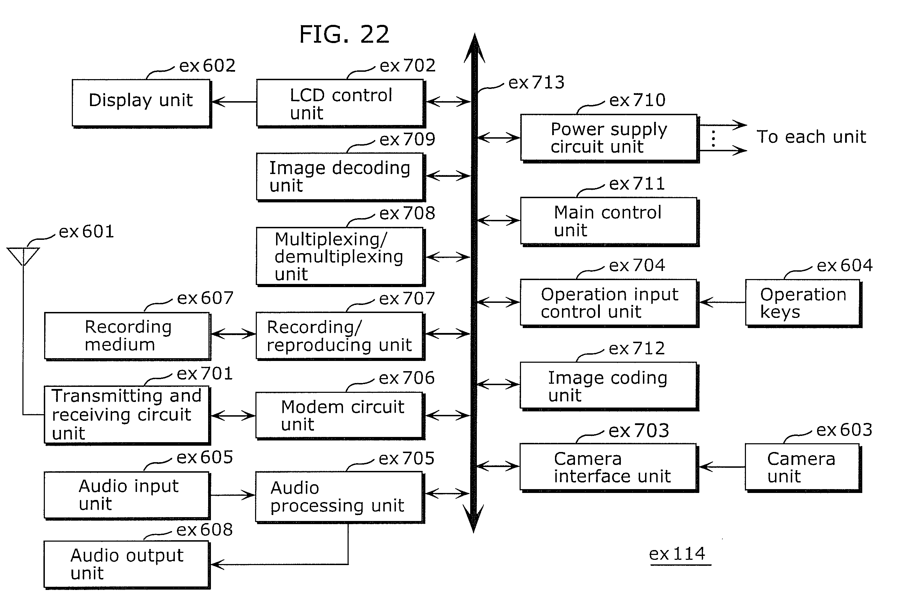

Next, the cellular phone ex114 will be described with reference to FIG. 22. In the cellular phone ex114, a main control unit ex711 designed to control overall each unit of the main body including the display unit ex602 as well as the operation keys ex604 is connected mutually, via a synchronous bus ex713, to a power supply circuit unit ex710, an operation input control unit ex704, an image coding unit ex712, a camera interface unit ex703, a liquid crystal display (LCD) control unit ex702, an image decoding unit ex709, a multiplexing/demultiplexing unit ex708, a recording/reproducing unit ex707, a modem circuit unit ex706, and an audio processing unit ex705.

When a call-end key and a power key are turned ON by a user's operation, the power supply circuit unit ex710 supplies the respective units with power from a battery pack so as to activate the cell phone ex114 that is digital and is equipped with the camera.

In the cellular phone ex114, the audio processing unit ex705 converts the audio signals collected by the audio input unit ex605 in voice conversation mode into digital audio data under the control of the main control unit ex711 including a CPU, ROM, and RAM. Then, the modem circuit unit ex706 performs spread spectrum processing on the digital audio data, and the transmitting and receiving circuit unit ex701 performs digital-to-analog conversion and frequency conversion on the data, so as to transmit the resulting data via the antenna ex601. In addition, in the cellular phone ex114, the transmitting and receiving circuit unit ex701 amplifies the data received by the antenna ex601 in voice conversation mode and performs frequency conversion and the analog-to-digital conversion on the data. Then, the modem circuit unit ex706 performs inverse spread spectrum processing on the data, and the audio processing unit ex705 converts it into analog audio data, so as to output it via the audio output unit ex608.

Furthermore, when an e-mail in data communication mode is transmitted, text data of the e-mail inputted by operating the operation keys ex604 of the main body is sent out to the main control unit ex711 via the operation input control unit ex704. The main control unit ex711 causes the modem circuit unit ex706 to perform spread spectrum processing on the text data, and the transmitting and receiving circuit unit ex701 performs the digital-to-analog conversion and the frequency conversion on the resulting data to transmit the data to the base station ex110 via the antenna ex601.

When image data is transmitted in data communication mode, the image data captured by the camera unit ex603 is supplied to the picture coding unit ex712 via the camera interface unit ex703. Furthermore, when the image data is not transmitted, the image data captured by the camera unit ex603 can be displayed directly on the display unit ex602 via the camera interface unit ex703 and the LCD control unit ex702.

The image coding unit ex712 including the image coding apparatus as described for the present invention compresses-codes the image data supplied from the camera unit ex603 using the coding method employed by the image coding apparatus as shown in Embodiment 1 so as to transform the data into coded image data, and sends the data out to the multiplexing/demultiplexing unit ex708. Furthermore, the cellular phone ex114 simultaneously sends out, as digital audio data, the audio collected by the audio input unit ex605 during the capturing with the camera unit ex603 to the multiplexing/demultiplexing unit ex708 via the audio processing unit ex705.

The multiplexing/demultiplexing unit ex708 multiplexes the coded image data supplied from the image coding unit ex712 and the audio data supplied from the audio processing unit ex705, using a predetermined method. Then, the modem circuit unit ex706 performs spread spectrum processing on the multiplexed data obtained by the multiplexing/demultiplexing unit ex708.

When receiving data of a video file which is linked to a Web page and others in data communication mode, the modem circuit unit ex706 performs inverse spread spectrum processing on the data received from the base station ex110 via the antenna ex601, and sends out the multiplexed data obtained as a result of the inverse spread spectrum processing to the multiplexing/demultiplexing unit ex708.

In order to decode the multiplexed data received via the antenna ex601, the multiplexing/demultiplexing unit ex708 demultiplexes the multiplexed data into a bit stream of image data and that of audio data, and supplies the coded image data to the image decoding unit ex709 and the audio data to the audio processing unit ex705, respectively via the synchronous bus ex713.

Next, the image decoding unit ex709 including the image decoding apparatus as described for the present invention decodes the bit stream of the image data using the decoding method corresponding to the coding method as shown in Embodiment 1 so as to generate reproduced video data, and supplies this data to the display unit ex602 via the LCD control unit ex702. Thus, the video data included in the video file linked to the Web page, for instance, is displayed. Simultaneously, the audio processing unit ex705 converts the audio data into analog audio data, and supplies the data to the audio output unit ex608. Thus, the audio data included in the video file linked to the Web page, for instance, is reproduced.

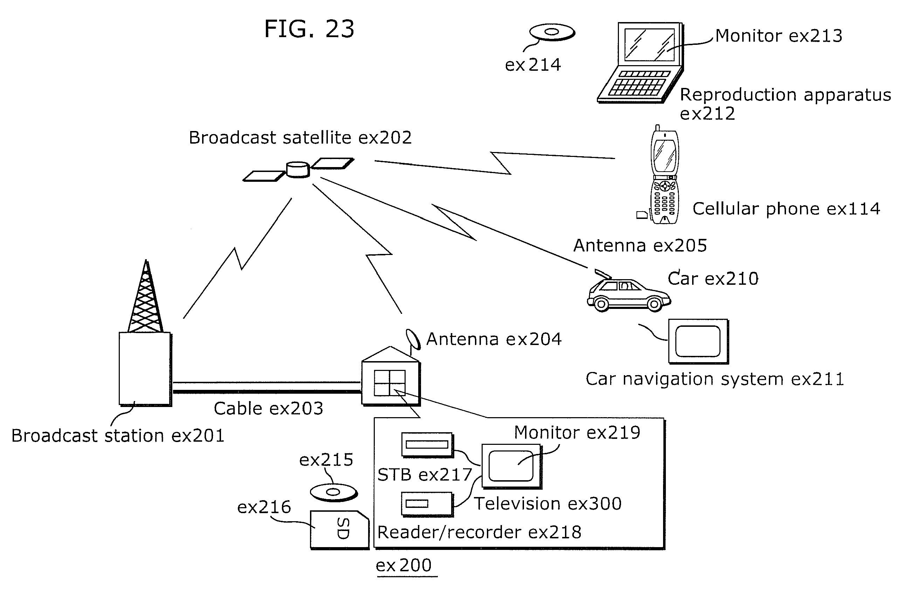

The present invention is not limited to the above-mentioned system because terrestrial or satellite digital broadcasting has been in the news lately, and at least either the image coding apparatus or the image decoding apparatus described in Embodiment 1 can be incorporated into a digital broadcasting system as shown in FIG. 23. More specifically, a broadcast station ex201 communicates or transmits, via radio waves to a broadcast satellite ex202, audio data, video data, or a bit stream obtained by multiplexing the audio data and the video data. Upon receipt of the bit stream, the broadcast satellite ex202 transmits radio waves for broadcasting. Then, a home-use antenna ex204 with a satellite broadcast reception function receives the radio waves, and a device, such as a television (receiver) ex300 and a set top box (STB) ex217, decodes a coded bit stream and reproduces the decoded bit stream. Furthermore, a reader/recorder ex218 that reads and decodes such a bit stream obtained by multiplexing image data and audio data that are recorded on recording media ex215 and 216, such as a CD and a DVD, may include the image decoding apparatus as shown in Embodiment 1. In this case, the reproduced video signals are displayed on the monitor ex219. It is also possible to implement the image decoding apparatus in the set top box ex217 connected to a cable ex203 for a cable television or an antenna ex204 for satellite and/or terrestrial broadcasting, so as to reproduce the video signals on the monitor ex219 of the television ex300. The image decoding apparatus may be included not in the set top box but in the television ex300. Also, a car ex210 having an antenna ex205 can receive signals from the satellite ex202 or the base stations for reproducing video on a display device such as a car navigation system ex211 set in the car ex210.

Furthermore, the image decoding apparatus or the image coding apparatus as shown in Embodiment 1 can be implemented in the reader/recorder ex218 (i) for reading and decoding the video data, the audio data, or the coded bit stream obtained by multiplexing the video data and the audio data, or (ii) for coding the video data, the audio data, or the coded bit stream obtained by multiplexing the video data and the audio data and recording the resulting data as the multiplexed data on the recording medium ex215. Here, the video data and the audio data are recorded on the recording medium ex215, such as a BD and a DVD. In this case, the reproduced video signals are displayed on the monitor ex219. Furthermore, the reproduced video signals can be reproduced by another device or system, using the recording medium ex215 on which the coded bit stream is recorded. For example, another reproduction apparatus ex212 can reproduce the video signals on a monitor ex213, using a recording medium ex214 on which the coded bit stream is copied.

Furthermore, it is also possible to implement the image decoding apparatus in the set top box ex217 connected to the cable ex203 for a cable television or the antenna ex204 for satellite and/or terrestrial broadcasting, so as to display the video signals on the monitor ex219 of the television ex300. The image decoding apparatus may be included not in the set top box but in the television ex300.

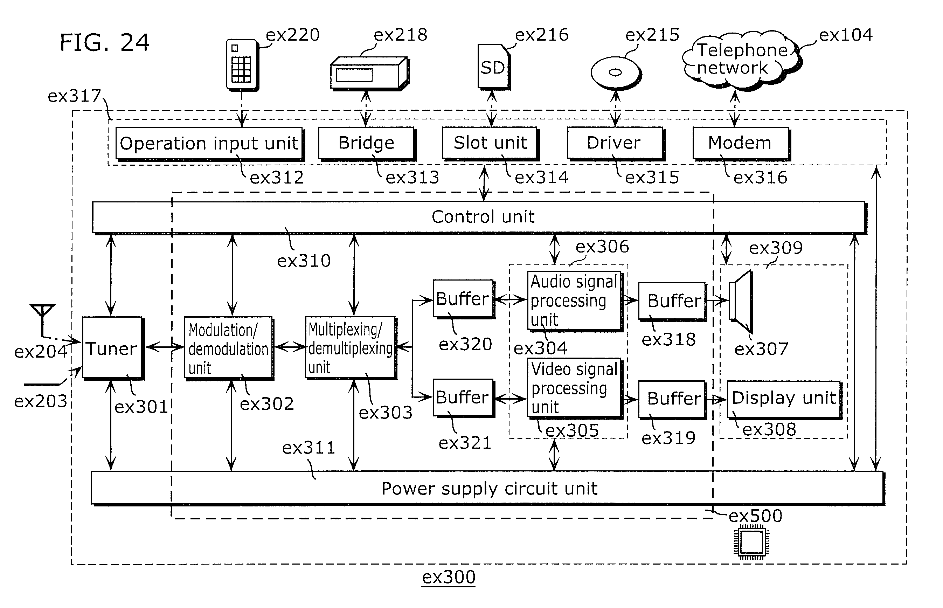

FIG. 24 illustrates the television (receiver) ex300 that uses the image coding method and the image decoding method described in Embodiment 1. The television ex300 includes: a tuner ex301 that obtains or provides a bit stream of video information from and through the antenna ex204 or the cable ex203, etc. that receives a broadcast; a modulation/demodulation unit ex302 that demodulates the received coded data or modulates data into coded data to be supplied outside; and a multiplexing/demultiplexing unit ex303 that demultiplexes the modulated data into video data and audio data, or multiplexes the coded video data and audio data into data. Furthermore, the television ex300 further includes:

a signal processing unit ex306 including an audio signal processing unit ex304 and a video signal processing unit ex305 that decode audio data and video data and code audio data and video data, respectively; a speaker ex307 that provides the decoded audio signal; and an output unit ex309 including a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to one another through a synchronous bus.

First, a configuration in which the television ex300 decodes data obtained from outside through the antenna ex204 and others and reproduces the decoded data will be described. In the television ex300, upon receipt of a user operation from a remote controller ex220 and others, the multiplexing/demultiplexing unit ex303 demultiplexes the video data and audio data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in Embodiment 1, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read a coded bitstream not through a broadcast and others but from the recording media ex215 and ex216, such as a magnetic disk, an optical disc, and an SD card. Next, a configuration in which the television ex300 codes an audio signal and a video signal, and transmits the data outside or writes the data on a recording medium will be described. In the television ex300, upon receipt of a user operation from the remote controller ex220 and others, the audio signal processing unit ex304 codes an audio signal, and the video signal processing unit ex305 codes a video signal, under control of the control unit ex310 using the coding method as described in Embodiment 1. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in buffers ex320 and ex321, and others so that the signals are reproduced in synchronization with each other. Here, the buffers ex318 to ex321 may be plural as illustrated, or at least one buffer may be shared in the television ex300. Furthermore, data may be stored in a buffer other than the buffers ex318 to ex321 so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be not capable of performing all the processes but capable of only one of receiving, decoding, and providing outside data.

Furthermore, when the reader/recorder ex218 reads or writes a coded bit stream from or in a recording medium, one of the television ex300 and the reader/recorder ex218 may decode or code the coded bit stream, and the television ex300 and the reader/recorder ex218 may share the decoding or coding.

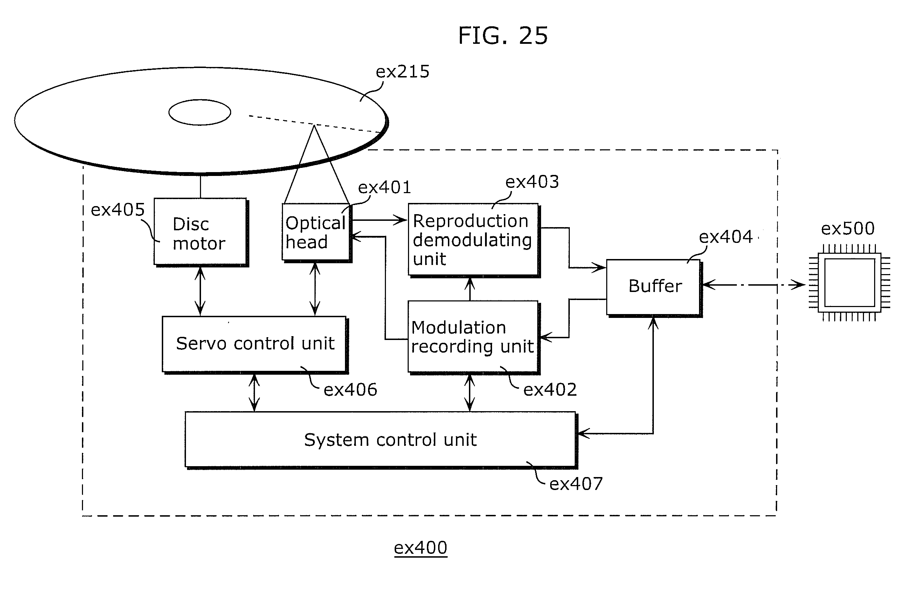

As an example, FIG. 25 illustrates a configuration of an information reproducing/recording unit ex400 when data is read or written from or in an optical disc. The information reproducing/recording unit ex400 includes constituent elements ex401 to ex407 to be described hereinafter. The optical head ex401 irradiates a laser spot on a recording surface of the recording medium ex215 that is an optical disc to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. A disk motor ex405 rotates the recording medium ex215. A servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

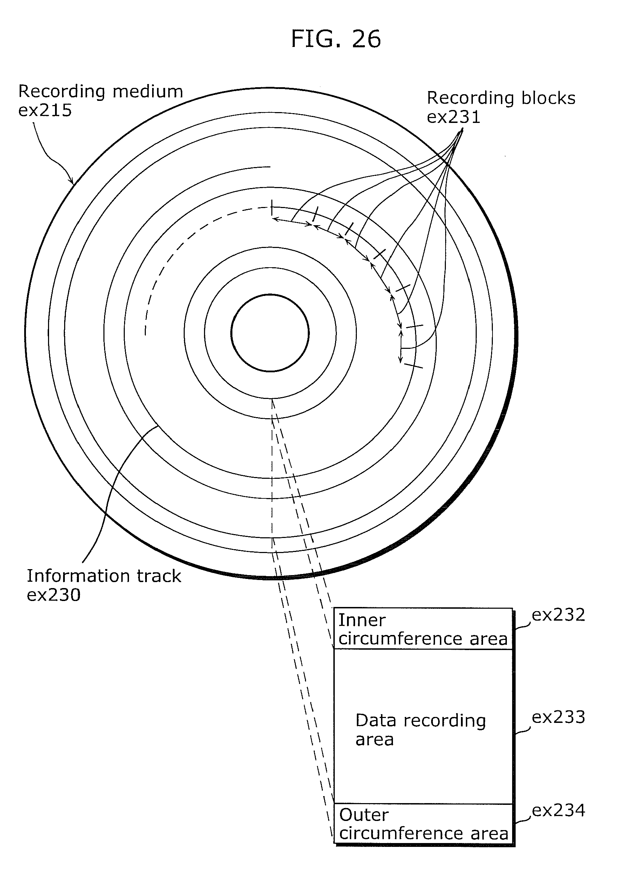

FIG. 26 schematically illustrates the recording medium ex215 that is the optical disc. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. An apparatus that records and reproduces data reproduces the information track ex230 and reads the address information so as to determine the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio data, coded video data, or coded data obtained by multiplexing the coded audio data and the coded video data, from and on the data recording area ex233 of the recording medium ex215.

Although an optical disc having a layer, such as a DVD and a BD is described as an example in the description, the optical disc is not limited to such, and may be an optical disc having a multilayer structure and capable of being recorded on a part other than the surface. Furthermore, the optical disc may have a structure for multidimensional recording/reproduction, such as recording of information using light of colors with different wavelengths in the same portion of the optical disc and recording information having different layers from various angles.

Furthermore, the car ex210 having the antenna ex205 can receive data from the satellite ex202 and others, and reproduce video on the display device such as the car navigation system ex211 set in the car ex210, in a digital broadcasting system ex200. Here, a configuration of the car navigation system ex211 will be the one for example, including a GPS receiving unit in the configuration illustrated in FIG. 24. The same will be true for the configuration of the computer ex111, the cellular phone ex114, and others. Furthermore, similarly to the television ex300, a terminal such as the cellular phone ex114 may have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus.

As such, the image coding method and the image decoding method in Embodiment 1 can be used in any of the devices and systems described. Thus, the advantages described therein can be obtained.

Furthermore, the present invention is not limited to Embodiment 1, and various modifications and revisions are possible without departing from the scope of the present invention.

(Embodiment 3)

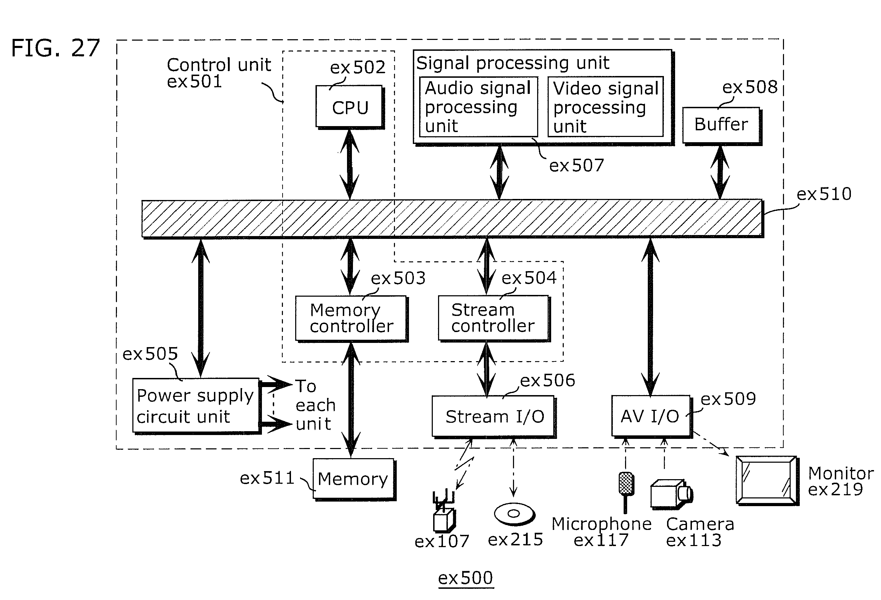

Each of the image coding method, the image coding apparatus, the image decoding method, and the image decoding apparatus in each of Embodiments is typically achieved in the form of an integrated circuit or a Large Scale Integrated (LSI) circuit. As an example, FIG. 27 illustrates a configuration of an LSI ex500 that is made into one chip. The LSI ex500 includes elements ex501 to ex509 to be described below, and the elements are connected to each other through a bus ex510. The power supply circuit unit ex505 is activated by supplying each of the elements with power when power is on.

For example, when coding is performed, the LSI ex500 receives an AV signal from a microphone ex117, a camera ex113, and others through an AV IO ex509 under control of a control unit ex501 including a CPU ex502, a memory controller ex503, and a stream controller ex504. The received AV signal is temporarily stored in a memory ex511 outside the LSI ex500, such as an SDRAM. Under control of the control unit ex501, the stored data is subdivided into data portions according to the computing amount and speed as necessary. Then, the data portions are transmitted to a signal processing unit ex507. The signal processing unit ex507 codes an audio signal and/or a video signal. Here, the coding of the video signal is the coding described in Embodiments. Furthermore, the signal processing unit ex507 sometimes multiplexes the coded audio data and the coded video data, and a stream I/O ex506 provides the multiplexed data outside. The provided bit stream is transmitted to a base station ex107, or written into the recording medium ex215. When data sets are multiplexed, the data sets should be temporarily stored in the buffer ex508 so that the data sets are synchronized with each other.

For example, when coded data is decoded, the LSI ex500 temporarily stores, in the memory ex511, the coded data obtained from the base station ex107 through the stream I/O ex506 or read from the recording medium ex215 under control of the control unit ex501. Under control of the control unit ex501, the stored data is subdivided into data portions according to the computing amount and speed as necessary. Then, the data portions are transmitted to the signal processing unit ex507. The signal processing unit ex507 decodes audio data and/or video data. Here, the decoding of the video signal is the decoding described in Embodiments. Furthermore, a decoded audio signal and a decoded video signal may be temporarily stored in the buffer ex508 and others so that the signals can be reproduced in synchronization with each other. Each of the output units, such as the cellular phone ex114, the game machine ex115, and the television ex300 provides the decoded output signal through, for example, the memory 511 as necessary.

Although the memory ex511 is an element outside the LSI ex500 in the description, it may be included in the LSI ex500. The buffer ex508 is not limited to one buffer, but may be composed of buffers. Furthermore, the LSI ex500 may be made into one chip or a plurality of chips.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. Field Programmable Gate Array (FPGA) that can be programmed after manufacturing LSI or a reconfigurable processor that allows re-configuration of the connection or configuration of an LSI can be used for the same purpose.

In the future, with advancement in semiconductor technology, a brand-new technology may replace LSI. The functional blocks can be integrated using such a technology. One such possibility is that the present invention is applied to biotechnology.

Although the coding method, the coding apparatus, the decoding method, and the decoding apparatus according to the present invention are hereinbefore described based on Embodiments, the present invention is not limited to these Embodiments. Those skilled in the art will readily appreciate that many modifications are possible in the exemplary Embodiments without materially departing from the novel teachings and advantages of the present invention. Accordingly, all such modifications and other embodiments conceivable by arbitrarily combining the structural elements and/or steps of different embodiments are intended to be included within the scope of the present invention.

[Industrial Applicability]

The image coding method and the image decoding method according to the present invention has an advantage of improving the coding efficiency, and is applicable to, for example, digital cameras, digital televisions, and Blu-ray Disc (BD) recorders.

[Reference Signs List]

| | |
|---|---|
| 10 | Current block |
| 20 | Reference pixels |
| 30, 40, 50, 80 | Surrounding block |
| 60, 61, 62 | Edge |
| 70 | Edge detection window |
| 100 | Image coding apparatus |
| 110 | Coding unit |
| 111, 221, 514 | Subtracting unit |
| 112 | Frequency transform unit |
| 113 | Quantization unit |
| 114 | Intra-prediction mode determining unit |
| 115 | Motion estimation unit |

| | |
|---|---|
| 116, 316 | Intra prediction unit |
| 117, 317 | Motion compensation unit |
| 118, 119, 315, 318 | Switch |
| 120 | Decoding unit |
| 121, 311 | Inverse quantization unit |
| 122, 312 | Inverse frequency transform unit |
| 123, 313, 422, 622 | Adding unit |
| 130 | Output unit |
| 131, 520 | Variable length coding unit |
| 140, 510 | Estimation unit |
| 141, 321 | Edge vector determining unit |
| 142, 322 | Candidate limiting unit |
| 143, 323, 513, 625 | Prediction mode estimation unit |
| 144 | Mode information generating unit |
| 150, 314 | Frame memory |
| 160 | Reference picture memory |
| 170, 340 | Control unit |
| 201, 401 | Edge detection unit |
| 202, 402 | Direction determining unit |
| 203, 403 | Norm determining unit |
| 204, 404 | Edge vector storage memory |
| 211, 411, 511, 623 | Prediction mode storage memory |
| 212, 412 | Candidate prediction mode limiting unit |
| 213, 413, 512, 624 | Candidate prediction mode obtaining unit |
| 222, 515 | Signal setting unit |
| 300 | Image decoding apparatus |
| 310 | Decoding unit |
| 320, 620 | Reconstructing unit |
| 324 | Prediction mode reconstructing unit |

| | |
|---|---|
| 330, 610 | Variable length decoding unit |
| 421, 621 | Signal determining unit ex100 Content providing system |
| ex101 | Internet |
| ex102 | Internet service provider |
| ex103 | Streaming server |
| ex104 | Telephone network |
| ex102, ex107, ex108, ex109, ex102 | Base station |
| ex111 | Computer |
| ex112 | PDA |
| ex113, ex116 | Camera |
| ex114 | Cellular phone equipped with camera (cellular phone) |
| ex115 | Game machine |
| ex117 | Microphone |
| ex200 | Digital broadcasting system |
| ex201 | Broadcast station |
| ex202 | Broadcast satellite (satellite) |
| ex203 | Cable |
| ex204, ex205, ex601 | Antenna |
| ex210 | Car |
| ex211 | Car navigation system |
| ex212 | Reproduction apparatus |
| ex213, ex219 | Monitor |
| ex214, ex215, ex216, ex607 | Recording medium |
| ex217 | Set top box (STB) |
| ex218 | Reader/recorder |
| ex220 | Remote controller |
| ex230 | Information track |
| ex231 | Recording blocks |
| ex232 | Inner circumference area |

| | |
|---|---|
| ex233 | Data recording area |
| ex234 | Outer circumference area |
| ex300 | Television |
| ex301 | Tuner |
| ex302 | Modulation/demodulation unit |
| ex303 | Multiplexing/demultiplexing unit |
| ex304 | Audio signal processing unit |
| ex305 | Video signal processing unit |
| ex306, ex507 | Signal processing unit |
| ex307 | Speaker |
| ex308, ex602 | Display unit |
| ex309 | Output unit |
| ex310, ex501 | Control unit |
| ex311, ex505, ex710 | Power supply circuit unit |
| ex312 | Operation input unit |
| ex313 | Bridge |
| ex314, ex606 | Slot unit |
| ex315 | Driver |
| ex316 | Modem |
| ex317 | Interface unit |
| ex318, ex319, ex320, ex321, ex404, ex508 | Buffer |
| ex400 | Information reproducing/recording unit |
| ex401 | Optical head |
| ex402 | Modulation recording unit |
| ex403 | Reproduction demodulating unit |
| ex405 | Disk motor |
| ex406 | Servo control unit |
| ex407 | System control unit |
| ex500 | LSI |

| | |
|---|---|
| ex502 | CPU |
| ex503 | Memory controller |
| ex504 | Stream controller |
| ex506 | Stream I/O |
| ex509 | AV IO |
| ex510 | Bus |
| ex511 | Memory |
| ex603 | Camera unit |
| ex604 | Operation keys |
| ex605 | Audio input unit |
| ex608 | Audio output unit |
| ex701 | Transmitting and receiving circuit unit |
| ex702 | LCD control unit |
| ex703 | Camera interface unit (camera I/F unit) |
| ex704 | Operation input control unit |
| ex705 | Audio processing unit |
| ex706 | Modem circuit unit |
| ex707 | Recording/reproducing unit |
| ex708 | Multiplexing/demultiplexing unit |
| ex709 | Image decoding unit |
| ex711 | Main control unit |
| ex712 | Image coding unit |
| ex713 | Synchronous bus |

## Claims

**1.** An image decoding method of decoding coded image data that is generated by coding image data on a block-by-block basis according to a prediction based on a prediction mode, said image decoding method comprising:

reconstructing a selected prediction mode based on mode information indicating an estimation result of the prediction mode implemented in coding, the selected prediction mode being a prediction mode that has been used for the prediction in coding; and
decoding a current block included in the coded image data according to a prediction based on the selected prediction mode to generate a decoded block,
wherein said reconstructing includes:

detecting an edge in a decoded block previously generated;
reducing a plurality of predetermined candidate prediction modes in number, based on the edge detected in said detecting;
determining, as an estimated prediction mode, one of the candidate prediction modes reduced in number in said reducing; and
reconstructing the selected prediction mode, based on the mode information and the estimated prediction mode.

**2.** The image decoding method according to Claim 1,
wherein the mode information is one of flag information and difference information, the flag information indicating that the prediction mode that has been used for the prediction in coding matches a prediction mode estimated in coding, and the difference information indicating a difference between the prediction mode that has been used for the prediction in coding and the prediction mode estimated in coding, and
in said reconstructing of the selected prediction mode, the estimated prediction mode is determined as the selected prediction mode when the mode information is the flag information, and the selected prediction mode is reconstructed by adding the difference to the estimated prediction mode when the mode information is the difference information.

**3.** The image decoding method according to Claim 2,
wherein in said reducing, the candidate prediction modes are reduced in number based on directions of one or more edges detected in said detecting.

**4.** The image decoding method according to Claim 3,
wherein the candidate prediction modes include a plurality of directional prediction modes that have been predefined, and
in said reducing, the candidate prediction modes are reduced in number by excluding, from the candidate prediction modes, one of the directional prediction modes indicating a direction most distant from the directions of the one or more edges detected in said detecting.

**5.** The image decoding method according to Claim 3,
wherein in said reducing, a variation between directions of two or more edges detected in said detecting is computed, and the candidate prediction modes are reduced in number based on the computed variation.

**6.** The image decoding method according to Claim 2,
wherein the candidate prediction modes include a plurality of prediction modes used when decoded blocks around the current block are generated, and
in said reducing, the candidate prediction modes are reduced in number by reducing the decoded blocks that are computation targets in number, based on the edge detected in said detecting.

**7.** The image decoding method according to Claim 6,
wherein in said reducing, the decoded blocks are reduced in number by excluding, from the computation targets, a decoded block in which no edge is detected in said detecting.

**8.** The image decoding method according to Claim 7,
wherein in said reducing, the decoded blocks are reduced in number by (i) determining a maximum edge with a strongest norm from among one or more edges detected in said detecting and (ii) limiting the computation targets to a decoded block in which the maximum edge has been detected.

**9.** The image decoding method according to Claim 6,
wherein in said reducing, the computation targets are limited to decoded blocks to the left of the current block when a horizontal component is larger than a vertical component, and the decoded blocks are reduced in number by limiting the computation targets to decoded blocks to the upper of the current block when the vertical component is larger than the horizontal component, the horizontal component and the vertical component being of a direction of the edge detected in said detecting.

**10.** An image coding method of coding image data on a block-by-block basis, said image coding method comprising:

coding a current block included in the image data according to a prediction based on a prediction mode selected from among predetermined candidate prediction modes;

decoding the coded current block to generate a decoded block;
determining, as an estimated prediction mode, one of the candidate prediction modes; and
outputting mode information for reconstructing the selected prediction mode, together with the coded current block,
wherein said determining includes:

detecting an edge in a decoded block previously generated;
reducing the candidate prediction modes in number, based on the edge detected in said detecting;
determining, in a predetermined method, one of the candidate prediction modes reduced in number in said reducing as the estimated prediction mode; and
generating the mode information, based on the estimated prediction mode and the selected prediction mode.

**11.** The image coding method according to Claim 10,
wherein in said generating, the estimated prediction mode is compared with the selected prediction mode, a flag indicating that the estimated prediction mode matches the selected prediction mode is generated as the mode information when the estimated prediction mode matches the selected prediction mode, and difference information is generated as the mode information when the estimated prediction mode does not match the selected prediction mode, the difference information indicating a difference between the estimated prediction mode and the selected prediction mode.

**12.** The image coding method according to Claim 11,
wherein the candidate prediction modes include a plurality of directional prediction modes that have been predefined, and
in said reducing, the candidate prediction modes are reduced in number by excluding, from the candidate prediction modes, one of the directional prediction modes indicating a direction most distant from directions of one or more edges detected in said detecting.

**13.** The image coding method according to Claim 11,
wherein the candidate prediction modes include a plurality of prediction modes used when decoded blocks around the current block are generated, and
in said reducing, the candidate prediction modes are reduced in number by reducing the decoded blocks that are computation targets in number, based on the edge detected in said detecting.

**14.** The image coding method according to Claim 13,
wherein in said reducing, the decoded blocks are reduced in number by excluding, from the computation targets, a decoded block in which no edge is detected in said detecting.

**15.** The image coding method according to Claim 13,
wherein in said reducing, the computation targets are limited to decoded blocks to the left of the current block when a horizontal component is larger than a vertical component, and the decoded blocks are reduced in number by limiting the computation targets to decoded blocks to the upper of the current block when the vertical component is larger than the horizontal component, the horizontal component and the vertical component being of a direction of the edge detected in said detecting.

**16.** An image decoding apparatus that decodes coded image data that is generated by coding image data on a block-by-block basis according to a prediction based on a prediction mode, said image decoding apparatus comprising:

a reconstructing unit configured to reconstruct a selected prediction mode based on mode information indicating an estimation result of the prediction mode implemented in coding, the selected prediction mode being a prediction mode that has been used for the prediction in coding; and
a decoding unit configured to decode a current block included in the coded image data according to a prediction based on the selected prediction mode to generate a decoded block,
wherein said reconstructing unit includes:

an edge detection unit configured to detect an edge in a decoded block previously generated;
a candidate limiting unit configured to reduce a plurality of predetermined candidate prediction modes in number, based on the edge detected by said edge detection unit;
a prediction mode estimation unit configured to determine, as an estimated prediction mode, one of the candidate prediction modes reduced in number by said candidate limiting unit; and
a prediction mode reconstructing unit configured to reconstruct the selected prediction mode, based on the mode information and the estimated prediction mode.

**17.** An image coding apparatus that codes image data on a block-by-block basis, said image coding apparatus comprising:

a coding unit configured to code a current block included in the image data according to a prediction based on a prediction mode selected from among predetermined candidate prediction modes;
a decoding unit configured to decode the coded current block to generate a decoded block;
an estimation unit configured to determine, as an estimated prediction mode, one of the candidate prediction modes; and
an output unit configured to output mode information for reconstructing the selected prediction mode, together with the coded current block,
wherein said estimation unit includes:

an edge detection unit configured to detect an edge in a decoded block previously generated;
a candidate limiting unit configured to reduce the candidate prediction modes in number, based on the edge detected by said edge detection unit;
a prediction mode estimation unit configured to determine, in a predetermined method, one of the candidate prediction modes reduced in number by said candidate limiting unit as the estimated prediction mode; and
a mode information generating unit configured to generate the mode information, based on the estimated prediction mode and the selected prediction mode.

**18.** A program causing a computer to execute an image decoding method of decoding coded image data that is generated by coding image data on a block-by-block basis according to a prediction based on a prediction mode, the image decoding method including:

reconstructing a selected prediction mode based on mode information indicating an estimation result of the prediction mode implemented in coding, the selected prediction mode being a prediction mode that has been used for the prediction in coding; and
decoding a current block included in the coded image data according to a prediction based on the selected prediction mode to generate a decoded block,
wherein the reconstructing includes:

detecting an edge in a decoded block previously generated;
reducing a plurality of predetermined candidate prediction modes in number, based on the edge detected in the detecting;
determining, as an estimated prediction mode, one of the candidate prediction modes reduced in number in the reducing; and
reconstructing the selected prediction mode, based on the mode information and the estimated prediction mode.

**19.** A program causing a computer to execute an image coding method of coding image data on a block-by-block basis, the image coding method including:

coding a current block included in the image data according to a prediction based on a prediction mode selected from among predetermined candidate prediction modes;
decoding the coded current block to generate a decoded block;
determining, as an estimated prediction mode, one of the candidate prediction modes; and
outputting mode information for reconstructing the selected prediction mode, together with the coded current block,
wherein the determining includes:

detecting an edge in a decoded block previously generated;
reducing the candidate prediction modes in number, based on the edge detected in the detecting;
determining, in a predetermined method, one of the candidate prediction modes reduced in number in the reducing as the estimated prediction mode; and

generating the mode information, based on the estimated prediction mode and the selected prediction mode.

**20.** An integrated circuit that decodes coded image data that is generated by coding image data on a block-by-block basis according to a prediction based on a prediction mode, said integrated circuit comprising:

a reconstructing unit configured to reconstruct a selected prediction mode based on mode information indicating an estimation result of the prediction mode implemented in coding, the selected prediction mode being a prediction mode that has been used for the prediction in coding; and
a decoding unit configured to decode a current block included in the coded image data according to a prediction based on the selected prediction mode to generate a decoded block,
wherein said reconstructing unit includes:

an edge detection unit configured to detect an edge in a decoded block previously generated;
a candidate limiting unit configured to reduce a plurality of predetermined candidate prediction modes in number, based on the edge detected by said edge detection unit;
a prediction mode estimation unit configured to determine, as an estimated prediction mode, one of the candidate prediction modes reduced in number by said candidate limiting unit; and
a prediction mode reconstructing unit configured to reconstruct the selected prediction mode, based on the mode information and the estimated prediction mode.

**21.** An integrated circuit that codes image data on a block-by-block basis, said integrated circuit comprising:

a coding unit configured to code a current block included in the image data according to a prediction based on a prediction mode selected from among predetermined candidate prediction modes;
a decoding unit configured to decode the coded current block to generate a decoded block;
an estimation unit configured to determine, as an estimated prediction mode, one of the candidate prediction modes; and
an output unit configured to output mode information for reconstructing the selected prediction mode, together with the coded current block,
wherein said estimation unit includes:

an edge detection unit configured to detect an edge in a decoded block previously generated;
a candidate limiting unit configured to reduce the candidate prediction modes in number, based on the edge detected by said edge detection unit;
a prediction mode estimation unit configured to determine, in a predetermined method, one of the candidate prediction modes reduced in number by said candidate limiting unit as the estimated prediction mode; and
a mode information generating unit configured to generate the mode information, based on the estimated prediction mode and the selected prediction mode.

FIG. 1A

40
20
30
10

FIG. 1B

8
1
6
4
5
0
7
3

FIG. 2

SMD
(IPM, MV)
Prediction mode storage memory
511
Candidate prediction mode obtaining unit
512
Prediction mode estimation unit
513
SMD
MPM
+
−
514
DMD
Signal setting unit
515
SSMD
Estimation unit
510
Variable length coding unit
520
Bitstream

FIG. 3

610
Bitstream
Variable length decoding unit
QT
SSMD
622
Signal determining unit
DMD
+
+
623
SMD
621
MPM
Prediction mode storage memory
624
Candidate prediction mode obtaining unit
625
Prediction mode estimation unit
Reconstructing unit
620

FIG. 4
Image coding apparatus
100
Video data
(image data)
Coding unit
110
Decoding
unit
120
Output unit
130
Bitstream
Estimation unit
140
Edge vector
determining unit
141
Candidate
limiting unit
142
Prediction mode
estimation unit
143
Mode information
generating unit
144

FIG. 5
CTR
Control unit
170
130
Output unit
131
Variable length coding unit
Bitstream
110
Coding unit
150
Frame memory
Video data (image data)
Frequency transform unit
Quantization unit
QT
111
112
113
Inverse quantization unit
121
Estimation unit
SSMD
140
116
Intra prediction unit
IP
a
Inverse frequency transform unit
122
LDD
LD
123
Decoding unit
120
b
MP
Motion compensation unit
119
Switch
117
114
Intra-prediction mode determining unit
Reference picture memory
160
IPM
Motion estimation unit
118
Switch
115
MV
100
Image coding apparatus

FIG. 6
SMD
(IPM, MV)
LD
Bitstream
131
Variable
length
coding unit
SSMD
222
Signal
setting
unit
DMD
+
−
MPM
221
Mode information
generating unit
144
Estimation unit
140
142
Candidate limiting unit
211
Prediction
mode
storage
memory
213
Candidate
prediction
mode obtaining
unit
212
Candidate
prediction
mode limiting
unit
143
Prediction
mode
estimation
unit
141
204
Edge vector
storage
memory
Edge vector determining unit
201
Edge
detection
unit
202
Direction
determining
unit
203
Norm
determining
unit

FIG. 7A

50
60
61
10

FIG. 7B

70
50
80
62
10

FIG. 8

Start
Code current block
S101
Generate decoded block
S102
Edge detection process
S103
S104
Edge detected?
No
Yes
Limit candidate prediction modes
S105
Determine estimated prediction mode
S106
Generate mode information
S107
Output mode information and coded current block
S108
End

FIG. 9

Image decoding apparatus
300
Video data
(image data)
320
Decoding unit
310
Edge vector determining unit
321
Candidate limiting unit
322
Prediction mode estimation unit
323
Prediction mode reconstructing unit
324
Reconstructing unit
Coded image data
Mode information

FIG. 10

Bitstream
Variable length decoding unit
330
SSMD
Reconstructing unit
320
SMD
QT
Inverse quantization unit
311
Inverse frequency transform unit
312
LDD
313
LD
Frame memory
314
Video data (image data)
Switch
315
a
b
IPM
MV
Intra prediction unit
316
Motion compensation unit
317
IP
MP
Switch
318
Decoding unit
310
Control unit
340
Image decoding apparatus
300

FIG. 11
Bitstream
Variable length decoding unit
330
QT
SSMD
Signal determining unit
421
DMD
+
422
+
MPM
Prediction mode reconstructing unit
324
SMD
LD
Reconstructing unit
320
321
Edge vector determining unit
Edge detection unit
401
Direction determining unit
402
Norm determining unit
403
Edge vector storage memory
404
Candidate limiting unit
322
Candidate prediction mode limiting unit
412
Prediction mode storage memory
411
413
Candidate prediction mode obtaining unit
323
Prediction mode estimation unit

FIG. 12

Start
Edge detection process
S201
S202
Edge detected?
No
Yes
Narrow down candidate prediction modes
S203
Determine estimated prediction mode
S204
Reconstruct selected prediction mode based on estimated prediction mode and mode information
S205
Generate decoded block
S206
End

FIG. 13
Edge detection process
S301
Set pixel position
S302
Compute gradient vector
S303
Compute direction of edge vector
S304
Edge vector points to current block to be predicted?
Yes
No
S305
Next pixel?
Yes
No
End
S306
Compute norm
S307
Norm larger than threshold?
Yes
No
S308
Norm larger than strongest norm?
Yes
No
S309
Set norm as strongest norm
S310
Store edge vector and pixel position

FIG. 14

Process of determining prediction mode estimate
Edge detection process
S401
S402
At least one edge vector stored?
Yes
No
S404
Edge angle computing process
S403
Determine prediction mode estimate in conventional method of determining prediction mode estimate
S405
Limit candidate prediction modes based on direction of edge vector
S406
Determine one of limited candidate prediction modes as prediction mode estimate
End

FIG. 15A

8
Edge
①
10°
⑥
3
4
7
0
5

FIG. 15B

Candidates are 3, 7, 0, 5, 4, and 6
10
Candidates are 5, 4, 6, 1, and 8

FIG. 16
Edge angle computing process
S501
Compute and store angle of maximum vector
S502
Set pixel position
S503
Vector stored at this position exists?
Yes
No
S504
Compute norm of stored vector
S505
Norm larger than one-half of maximum norm?
No
Yes
S506
Compute and store angle of vector
S507
Next pixel?
Yes
No
S508
Average stored angles
End

FIG. 17
Process of determining prediction mode estimate
Edge detection process
S601
At least one edge vector stored?
S602
Yes
No
Compute variance of stored edge vectors
S604
Determine prediction mode estimate in conventional method of determining prediction mode estimate
S603
Variance larger than threshold?
S605
Yes
No
Edge angle computing process
S607
Determine intra prediction using edge direction as prediction mode estimate
S606
Limit candidate prediction modes based on variance
S608
Determine one of limited candidate prediction modes as prediction mode estimate
S609
End

FIG. 18

Process of determining prediction mode estimate
Edge detection process
S701
S702
At least one edge vector stored?
Yes
No
S703
Limit to block area at pixel position of stored edge vector
S704
Determine prediction mode estimate using limited block area
S705
Determine prediction mode estimate in conventional method of determining prediction mode estimate
End

FIG. 19A

Block for determination
Edge
Edge
10
Block for determination

FIG. 19B

Candidate when horizontal component of edge < vertical component of edge
10
Candidate when horizontal component of edge > vertical component of edge

Camera ex116
Computer ex111
Game machine ex115
PDA ex112
Camera ex113
LSI ex500
ex106
ex107
ex108
ex109
ex110
Cellular phone ex114
ex100
Telephone network ex104
Streaming server ex103
Internet ex101
Internet service provider ex102

FIG. 20

FIG. 21

ex601
ex608
ex602
ex603
ex604
ex606
ex607
SD
ex605
ex114
12
3
45
6
78
9
*0
#
manner

FIG. 22
To each unit
ex604
Operation keys
ex603
Camera unit
ex710
Power supply circuit unit
ex711
Main control unit
ex704
Operation input control unit
ex712
Image coding unit
ex703
Camera interface unit
ex114
ex713
ex702
LCD control unit
ex709
Image decoding unit
ex708
Multiplexing/ demultiplexing unit
ex707
Recording/ reproducing unit
ex706
Modem circuit unit
ex705
Audio processing unit
ex602
Display unit
ex607
Recording medium
ex701
Transmitting and receiving circuit unit
ex605
Audio input unit
ex608
Audio output unit
ex601

Monitor ex213
Reproduction apparatus ex212
Cellular phone ex114
Car ex210
Antenna ex205
Car navigation system ex211
ex214
Antenna ex204
Monitor ex219
Television ex300
Reader/recorder ex218
STB ex217
ex200
Broadcast satellite ex202
ex215
SD
ex216
Cable ex203
Broadcast station ex201

FIG. 23

FIG. 24
ex220
ex218
ex216
SD
ex215
ex104
Telephone network
ex317
Operation input unit
ex312
Bridge
ex313
Slot unit
ex314
Driver
ex315
Modem
ex316
Control unit
ex310
Tuner
ex301
ex204
ex203
Modulation/ demodulation unit
ex302
Multiplexing/ demultiplexing unit
ex303
Buffer
ex320
Buffer
ex321
Audio signal processing unit
ex304
Video signal processing unit
ex305
ex306
Buffer
ex318
Buffer
ex319
ex309
ex307
Display unit
ex308
ex311
Power supply circuit unit
ex500
ex300

FIG. 25
ex215
ex401
Optical head
ex403
Reproduction demodulating unit
ex402
Modulation recording unit
ex404
Buffer
ex500
ex405
Disc motor
ex406
Servo control unit
ex407
System control unit
ex400

FIG. 26

Recording medium
ex215
Recording blocks
ex231
Information track
ex230
Inner
circumference area
ex232
Data recording
area
ex233
Outer
circumference area
ex234

FIG. 27
Control unit
ex501
ex502
CPU
ex503
Memory controller
ex504
Stream controller
Signal processing unit
Audio signal processing unit
Video signal processing unit
ex507
ex508
Buffer
ex510
ex505
Power supply circuit unit
To each unit
ex506
Stream I/O
ex509
AV I/O
Memory
ex511
ex107
ex215
Microphone
ex117
Camera
ex113
Monitor
ex219
ex500

## INTERNATIONAL SEARCH REPORT

International application No.
PCT/JP2010/000445

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br>A | JP 2007-116351 A (NTT Docomo Inc.),<br>10 May 2007 (10.05.2007),<br>paragraphs [0045] to [0049], [0055], [0062] to [0064]<br>& US 2009/0232206 A1 & EP 1954060 A1<br>& WO 2007/046433 A1 & KR 10-2008-0064982 A<br>& CN 101292536 A | 1-4,10-12, 16-21<br>5-9,13-15 |
| Y<br><br>A | JP 2003-520531 A (Nokia Corp.),<br>02 July 2003 (02.07.2003),<br>entire text; all drawings<br>& US 2001/0017942 A1 & WO 2001/054416 A1 | 1-4,10-12, 16-21<br>5-9,13-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 April, 2010 (13.04.10) | 27 April, 2010 (27.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)